(19) Europäisches Patentamt
European Patent Office
Office européen des brevets

(11) Publication number: **0 186 711 A1**

(12) **EUROPEAN PATENT APPLICATION**
published in accordance with Art. 158(3) EPC

(21) Application number: **85903044.7**

(22) Date of filing: **17.06.85**

Data of the international application taken as a basis:

(86) International application number: **PCT/JP 85/00338**

(87) International publication number: **WO 86/00460 (16.01.86 86/2)**

(51) Int. Cl.⁴: **G 21 B 1/00**, H 05 H 15/00, G 01 V 7/00, C 03 B 23/08, G 03 H 1/00

(30) Priority: **18.06.84 JP 123630/84**

(43) Date of publication of application: **09.07.86 Bulletin 86/28**

(84) Designated Contracting States: **AT BE CH DE FR GB IT LI LU NL SE**

(71) Applicant: **SOZO KAGAKU GIJUTSU KENKYUSHO YUGEN KAISHA, Room 302 Diamond Nishi-Shinjuku Bldg., 8-5, Nishi-Shinjuku 5-chome, Shinjuku-ku, Tokyo 160 (JP)**

(72) Inventor: **TOYAMA, Jun Room 302 Diamond Nishi-Shinjuku Bldg., 8-5, Nishi-Shinjuku 5-chome, Shinjuku-ku Tokyo 160 (JP)**

(74) Representative: **Crawford, Andrew Birkby et al, A.A. THORNTON & CO. Northumberland House 303-306 High Holborn, London WC1V 7LE (GB)**

(54) **METHOD OF IMPARTING ENERGY TO MATTER BY UTILIZING HOLOGRAPHY AND AN APPARATUS THEREFOR.**

(57) A method and an apparatus for imparting energy to matter by utilizing holography. A plurality of partial holograms (Hi) are arranged to form a sphere in a vacuum vessel which accomodates a group of particles of matter. The holograms (Hi) are irradiated with regenerated light (L) to form a plurality of real hologram images. Real hologram images form a closed light shell (1K) to impart energy to the particles of matter confined therein by the explosion condensation. Real light shell images formed by holography can further be utilized for accelerating particles, for generating gravity waves, for holography machine tools and the like.

Hi
L
L'
7
8
L'
IK
Hi
L'
Δd
Hi
L
L'
Hi

EP 0 186 711 A1

TITLE MODIFIED
see front page



METHOD AND APPARATUS FOR IMPARTING ENERGY TO SUBSTANCE BY USING HOLOGRAPHY TECHNIQUE

## BACKGROUND OF THE INVENTION

This invention relates to a method and apparatus for entrapping or moving substance by imparting energy to groups of substance particles, for example gas, plasma, etc., by geometric development of wave energy occurring in holography technique capable of developing informations in a three dimensional space, and more particularly to a method and apparatus for entrapping ultra-high temperature substance or imparting velocity to such ultra high temperature substance.

Since the discovery of the principle of holography by Dr. Dennis Gator in the year of 1948, many developments and applications of the holography technique have been made and many references relating thereto have been published among which may be mentioned, Kazumi Murata's text book "Introduction to Holography", published by Asakura Shoten, March, 1979.

Although methods have been proposed to impart energy, for example force, to material, these methods can be classified from the standpoint of technical view. According to a first method, force is applied to material by utilizing it as medium. More particularly, force is applied to a body by utilizing a solid substance as a medium or by utilizing a fluid as the medium. It may be considered that conventional mechanical method corresponds to the former method and that a fluid clutch, a steam turbine, etc., correspond to the latter method. According to a second method a force is applied to a body by using magnetic force as a medium. More particularly, this method corresponds to an electric motor, a plasma entrapping method and many other methods. According to a third method a force is applied to a body by utilizing electric force as a medium. More particularly, among these methods may be mentioned a method of attracting small bodies or particles by using an electrostatic force. According to a fourth method, a force is applied to a body by utilizing the gravity of the earth in which a fluid is passed through a pipe by utilizing the gravity. According to a fifth method, a force is applied to a substance by utilizing the energy of a wave motion. A concrete example of this method is an inertial entrapping of plasma utilized in a nuclear fusion reaction. Furthermore, methods of working workpieces by applying forces thereto have been proposed as disclosed in Japanese Patent application No. 62396/1981 entitled "A Holography Working Machine", and Japanese Patent Application No. 67776/84 entitled "A Working Machine Utilizing Sound Wave Holography".

The invention particularly relates to a method and apparatus utilizing the fifth method in which the energy of the wave motion is utilized.

SUMMARY OF THE INVENTION

The invention contemplates solution of a number of problems which could not be solved by prior art technique owing to some obstacles. A first one of the obstacles is caused by the fact that the temperature of an object to be applied with the force is too high. A second obstacle is caused by the fact that the energy density of the force to be applied to the object is too high. A third obstacle is caused by the fact that the variation with time of the force applied to the object is required to be highly accurate, and a fourth obstacle is caused by the fact that the force to be applied to the object should have a high spacial accuracy.

An object of this invention is to provide an improved method and apparatus that can surmount various technical limits which prior art technique could not overcome, thereby obviating various obstacles described above.

I have found that these obstacles can be solved by applying holography technique.

A sound wave holography and an electron beam holography are included in the holography utilizing wave motions other than electromagnetic wave. To simplify the description, although an electromagnetic wave holography will be described hereunder, it should be understood that the principle is the same for other holographies utilizing other waves.

A holography utilizing light wave can reproduce cubic images of which a cubic real image is pertinent to this invention. Optional realization of a cubic real image in a definite range can be effected by using a computer holography. A desired real image can be obtained by forming a hologram with the computer holography and then irradiating the hologram with coherent reproducing light. Computer holography is described in detail in French Patent Application No. 2391500, filed in 1979, the disclosure of which is hereby incorporated by reference. In a holography utilized as photographic technique, light reflected by an object is caused to interfere with reference light and a photographic film is exposed to interfered lights to form a hologram. However, the hologram utilized in this case is prepared by calculating informations regarding design and mechanical motions with a computer and then depicting the result of calculation. Accordingly, a highly accurate hologram can be prepared. The reproduced hologram can be magnified with a magnifying factor of $\lambda'/\lambda$ where $\lambda$ represents the wavelength of light utilized to prepare the hologram and $\lambda'$ that of the light used for magnification or reproduction. In other words, a hologram prepared for obtaining a real image and having the same size as the object by using light of a wavelength $\lambda$ can be magnified with a magnifying factor of $\lambda'/\lambda$ by using reproducing light having a wavelength of $\lambda'$. Conversely, in order to obtain a real image of the magnifying power of $\lambda'/\lambda$ with reproducing light having a wavelength of $\lambda$, it is necessary to prepare a hologram with light having a wavelength of $\lambda^2/\lambda'$. In this manner, in computer holography, any magnifying power can be obtained by adjusting the wavelength of the reproducing light and the hologram.

This fact shows that a real image of high resolution can be obtained where a large hologram is formed and then reducing its size to form a reproduced image. The spacial point at which the holography real image is formed corresponds to a focus of a light flux, that is a high energy space (high temperature space).

This high temperature space (actually, a very small region) can be considered as three dimensional gathering point. Consequently, a high temperature point can be formed as a real image at any point in a definite space by utilizing holography, and a high temperature space as an assembly of such high temperature points can be formed at any point in a definite region. More particularly, a computer holography utilizing an electromagnetic wave can form any three dimensional region in a definite region. Moreover, the high energy space can be controlled with time. The invention can solve various problems which have been difficult or impossible to solve with prior art technique by utilizing the fundamental characteristics of holography described above.

According to one aspect of this invention there is provided a method of imparting energy to substance by utilizing holography technique comprising the steps of forming a light shell by utilizing real images produced by holography technique and subjecting the substance entrapped in the light shell to explosive compression thus imparting energy to the substance.

In most applications the light shell takes the form of a split progressive multilayer spherical light shell which is expanded or contracted or moved to convey or accelerate the particles of the substance.

Where nuclear fuel substance is entrapped in the light shell and heated to an extremely high temperature, a nuclear fission or fusion reaction takes place. In other words, a nuclear fission reactor or nuclear fusion reactor embodying a novel principle of this invention can be obtained.

After rotating a light shell entrapping particles of substance at a high speed along a hollow doughnut shaped orbit, and then releasing the particles in a tangential direction of the orbit, the particles are accelerated linearly.

Where a pair of split progressive multilayer spherical light shells entrapping particle groups of equal mass are rotated at an equal speed about the center of an evacuated vessel, a gravity wave is produced.

The method of this invention is also applicable to a holography working machine, to adiabatic expansion for producing articles of desired configurations and to many other applications.

According to another aspect of this invention there is provided apparatus for imparting energy to substance by utilizing holography technique comprising an evacuated vessel containing particles of the substance; a plurality of partial holograms arranged in the evacuated vessel to form a sphere; means for irradiating the partial holograms with reproducing light to form a plurality of real images of the partial holograms; the plurality of real images constituting a closed spherical shell entrapping therein the substance and imparting thereto energy by explosive compression.

The size of the spherical light shell is sequentially reduced for forming a progressive spherical light shell which increases temperature and density of the substance. In a preferred embodiment, a plurality of spherical light shells are formed concentrically to form a multilayer spherical light shell for imparting more energy to the substance.

According to still another aspect of this invention there is provided apparatus for effecting nuclear reaction of nuclear fuel substance by utilizing holography technique comprising an evacuated vessel containing the nuclear fuel substance; a plurality of partial holograms associated with the evacuated vessel to form a sphere; means for irradiating the partial holograms with reproducing light to form a plurality of real images of the partial holograms; the plurality of real images constituting a spherical light shell entrapping therein the nuclear fuel substance and imparting thereto energy by explosive compression; means for reducing a diameter of the spherical light shell for heating and compressing the nuclear fuel substance to a temperature necessary to effect nuclear reaction which creates electromagnetic waves propagating toward the evacuated vessel; and means for passing medium in contact with the evacuated vessel for absorbing energy of the electromagnetic waves.

When the nuclear fuel substance comprises a relatively heavy element a nuclear fission reaction takes place, whereas when the nuclear fuel substance comprises a relatively light element a nuclear fusion reaction takes place. Where the evacuated vessel has a double wall construction, such heat absorbing medium as air, water or mixture thereof is passed through a space between the walls.

According to a further aspect of this invention there is provided a holography working machine comprising an evacuated working chamber; means installed in the working chamber for supporting a product to be manufactured; at least one partial hologram for defining the working chamber; means for supplying vaporized material into the working chamber; and means for recovering not used vaporized material remaining in the working chamber.

According to still further aspect of this invention there is provided apparatus for accelerating particles by utilizing holography technique comprising a hollow doughnut shaped orbit; a hollow progressive multilayer spherical light shell formed by utilizing real images of holograms and containing therein the particles; the particles being imparted with energy by the light shell; means for rotating the light shell along the orbit like a piston; and means for quickly extinguishing the light shell to release the particles and concurrently opening the orbit in a tangential direction for causing the released particles to advance in the tangential direction.

In the particle accelerating apparatus where the progressive multilayer spherical light shell is combined with a split progressive light shell a crescent shaped light shell is formed.

According to another aspect of this invention, there is provided apparatus for linearly accelerating particles of substance by utilizing holography technique comprising a cylindrical vessel; a light shell formed in the cylindrical vessel for entrapping the particles therein; a plurality of computer controlled partial holograms located near the inner surface of the cylindrical vessel and formed sequentially so as to accelerate the light shell in the longitudinal direction of the cylindrical vessel; diffraction light from the partial holograms forming the light shell for imparting energy to the particles entrapped in the light shell; a plurality of vacuum pumps respectively constituted by light shells which are formed in the same manner as the firstly mentioned light shell and arranged in the longitudinal direction of the cylindrical vessel; and means for extinguishing one of the vacuum pumps at the exit end of the cylindrical vessel for taking out to the outside thereof accelerated particles.

According to yet another aspect of this invention there is provided gravity wave generating apparatus utilizing holography technique comprising an evacuated vessel; a spherical hologram constituted by a plurality of partial holograms contained in the evacuated vessel;

and a pair of diametrically opposing split progressive multilayer spherical light shells formed in the evacuated vessel by irradiating the partial holograms with reproducing light; the split progressive multilayer spherical light shells entrapping particle groups of equal mass and rotating at equal speed about the center of the evacuated vessel.

According to a modified embodiment of this invention, there is provided a gravity wave generating apparatus utilizing holography technique comprising an evacuated vessel filled with fluid; a spherical hologram constituted by a plurality of partial holograms contained in the evacuated vessel; and a split progressive multilayer spherical light shell formed in the evacuated vessel by reproducing light passing through the spherical hologram and entrapping therein the fluid; the split progressive multilayer light shell compressing the fluid and also acting as a pump to take therein the fluid on the outside thereof; and the split progressive multilayer spherical light shell reducing its diameter to finally form a pair of crescent shaped split progressive multilayer light shells.

According to yet another aspect of this invention there is provided apparatus for conveying working material to a working position of a holography working machine comprising means for defining an evacuated working chamber; a plurality of split holograms disposed to surround the working chamber; means for supplying working material into the working chamber; means for forming light shells in the evacuated working chamber by irradiating the split holograms with reproducing light so as to entrap the vaporized working material in the light shells; means for successively moving the light shells to the working position, thereby supplying the vaporized working material to a workpiece worked by the working machine; and means for discharging not used vaporized working material to the outside of the light shell.

## BRIEF DESCRIPTION OF THE DRAWINGS

In the accompanying drawings:

Fig. 1 is a cross-sectional view showing the focused images of a single light shell 1K';

Fig. 2 is a sectional view for explaining explosive compression of particle groups of substance effected by a single spherical light shell 1K';

Fig. 3 is a sectional view showing variation in the radius r of a partial single spherical light shell 1k';

Fig. 4 is a sectional view showing the focused images of a partial multilayer light shell Nk;

Fig. 5 is a sectional view showing multilayer light shell NK;

Fig. 6 is an enlarged sectional view of a portion of the multilayer light shell shown in Fig. 5;

Fig. 7 is a sectional view showing the variation in the radius r of the partial multilayer spherical light shell Nk;

Fig. 8 is a sectional view showing the focused images of a partial progressive multilayer spherical light shell SNk;

Fig. 9 is an enlarged sectional view of a portion of the focused images shown in Fig. 8;

Fig. 10 is a sectional view showing two adjacent partial split progressive multilayer spherical light shells BSNk;

Fig. 11 is an enlarged sectional view of a portion of Fig. 10;

Fig. 12 is a sectional view showing the focused images of a moving single light shell 1K';

Fig. 13 is a sectional view of a single light shell 1K' in which energy quantity is maldistributed;

Fig. 14 is a diagrammatic sectional view showing the movement of the center of a partial single light shell k;

Fig. 15 is a diagrammatic sectional view showing the movement of substance particle groups caused by a single light shell 1K;

Fig. 16 is a sectional view showing the movement of the center of the multilayer spherical light shell NK;

Fig. 17 is a sectional view showing the movement of the center of a partial multilayer spherical light shell Nk;

Fig. 18 is a sectional view showing the movement of the center of a progressive multilayer spherical light shell SNK;

Figs. 19A and 19B are sectional views showing two variations of the orientation angle of reproducing light;

Fig. 20 is a sectional view showing one example of apparatus for focusing the image of a single spherical light shell 1K adapted to compress substance particle groups by varying the radius of the spherical light shell;

Fig. 21 is an enlarged sectional view showing a portion of the evacuated vessel shown in Fig. 20;

Fig. 22 is a sectional view showing a modification of the evacuated vessel shown in Fig. 21;

Fig. 23 is a sectional view showing one example of the apparatus for focusing the image of a single spherical light shell 1K adapted to compress substance particle groups by varying the radius which has a hologram on the inner side;

Fig. 24 is a sectional view showing a modification of the apparatus shown in Fig. 23 in which a hologram is provided on the outside of the light shell;

Fig. 25 is a sectional view showing one example of a holography working machine;

Fig. 26 is a sectional view showing one example of a holography working machine having an internal evacuated working chamber defined by a light shell;

Fig. 27 is a plan view showing a hollow doughnut ring shaped orbit defined by a light shell;

Figs. 28A and 28B are diagrammatic representations of a method of comparing signals produced by flashing electric lamps and the velocity of a light flux 27;

Figs. 29A and 29B are plan views showing particle groups 26 accelerated along a circular orbit 4 by a light shell;

Fig. 30 is a diagrammatic representation showing a method of accelerating particle groups under an ultra high pressure and at an ultra high temperature along a circular orbit 4 by means of a light shell;

Fig. 31 is a sectional view showing particle accelerating apparatus having a cylindrical hologram;

Fig. 32a is a sectional view taken along a line XXXIIa-XXXIIa in Fig. 31;

Fig. 32b is a sectional view taken along a line XXXIIb-XXXIIb in Fig. 31;

Fig. 33 diagrammatically shows gravity wave generating apparatus in which two equal masses M are interconnected with a spring 29;

Figs. 34A and 34B are perspective view and side view showing gravity wave generating apparatus utilizing a rotating rod 31;

Fig. 35 is a diagrammatic representation of gravity wave generating apparatus in which the gravity wave is generated by two equal masses M rotating along a circular orbit 4;

Fig. 36 is a sectional view showing apparatus for rotating two equal masses M along a circular orbit 4 by means of a spherical light shell;

Fig. 37 is a sectional view showing apparatus for rotating two equal masses M along a circular orbit 4 by means of crescent shaped light shells;

Figs. 38A and 38B are sectional views showing apparatus for compressing substance to an ultra high density and for rotating the same at an ultra high velocity along a circular orbit by means of a light shell;

Fig. 39 is a sectional view showing one example of a holography working machine having an inner evacuated working chamber 22 and material conveying shells 35, which are defined by a light shell;

Figs. 40a - 40d are sectional views showing the procedures of solidifying substance by subjecting the same to an adiabatic expansion cooling with a spherical light shell (a case in which the center of gravity is not moved);

Figs. 41a - 41d are sectional views showing the procedures of solidifying substance by subjecting the same to an adiabatic expansion cooling with a light shell (a case in which the center of gravity is moved);

Figs. 42a - 42c are sectional views showing the procedures of subjecting material to an adiabatic expansion cooling for manufacturing a cup shaped body with a light shell;

Fig. 43 is a front view showing a method of laminating tomograms;

Figs. 44a and 44b show one example of a method of preparing a product having a complicated configuration by laminating tomograms;

Figs. 45a and 45b are front views showing one example of a method of laminating tomograms by an adiabatic expansion cooling effected by a light shell;

Figs. 46a and 46b are enlarged sectional views showing a portion of Fig. 45;

Figs. 47a and 47b are sectional views showing a modification of Figs. 46a and 46b;

Figs. 48a and 48b are sectional views showing another modification of Figs. 46a and 46b; and

Figs. 49a and 49b are sectional views showing a modification of the method shown in Figs. 45a and 45b.

DESCRIPTION OF THE PREFERRED EMBODIMENTS

Various applications of the principle of this invention will now be described.

Embodiment 1: Method of entrapping substance in a single light shell by utilizing holography technique

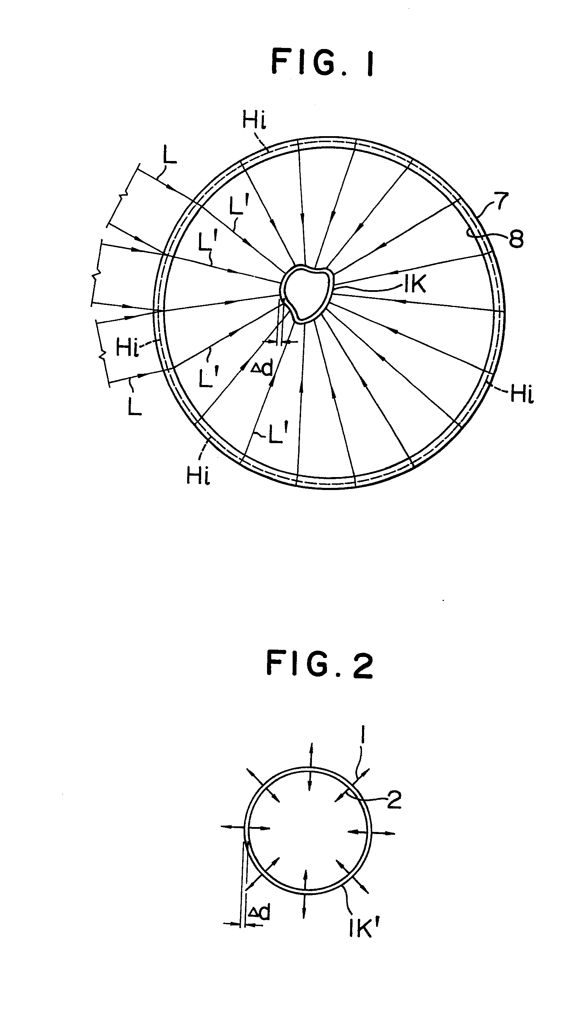

It is possible to form a closed single light shell 1K' (throughout the specification the term light covers any electromagnetic wave other than visible light) having any desired configuration and thickness $\Delta d$ in the inner space of a spherical hologram H made up of an assembly of numerous partial holograms Hi. This can be accomplished by irradiating from outside respective partial holograms Hi with reproducing light L (the term light also covers electromagnetic waves other than visible light) to realize respective portions of the single light shell 1K' as the real image of the holography and to form a closed single light shell 1K' made up of an assembly of the partial holograms as shown in Fig. 1. A method of entrapping a group of material particles (for example, gas or plasma) in the single light shell 1K' having any desired configuration will be described as follows.

For the sake of simplicity, it is assumed that the light shell is spherical and a single spherical light shell 1K' will be described as an example. Fig. 2 shows a sectional view showing a single spherical light shell 1K' having a thickness of Δd and formed by the method shown in Fig. 1 in a space inside of vacuum vessels 7 and 8 (see Fig. 1) filled with gas, for example. Since the gas is heated by the single spherical light shell 1K', an explosion 1 and an explosive compression 2 occur as shown by arrows in Fig. 2. At this time, about 1/2 of the gas heated by the single spherical light shell 1K' explodes toward outside and the other 1/2 of the gas is explosively compressed toward inside as shown by arrows. Accordingly, the gas would inertially be entrapped in the space inside of the single spherical light shell. Where the gas is strongly heated, it will form plasma. This method has been proposed to provide a laser nuclear fusion reaction. According to this invention, a phenomenon similar to the inertial entrapping caused by the explosive compression effected by heating the surface of nuclear fuel small particles with a laser beam can be realized by utilizing holography technique. Thus, the method of entrapping substance in the single spherical light shell can be applied to nuclear fusion reaction, but the detail thereof will be described later. The above described phenomenon was described with reference to gas and plasma, but the same principle also holds for liquid, a group of solid particles and a solid body.

Regarding the method of inertially entrapping plasma described above, a method will be described in which the density of the entrapped plasma is increased and the entrapping time is controlled.

Where the radius r of the single spherical light shell 1K' is decreased continuously or intermittently, the plasma will be entrapped in a gradually decreasing volume, thereby increasing its density. This method also enables to increase the radius r of the single spherical light shell 1K', thereby decreasing the plasma density. By adjusting the speed of increasing or decreasing the radius r, the trapping time of plasma can be controlled.

Concrete examples of these methods will now be described.

A hologram can record a number of object lights in a superposed relation. The space frequency and the orientation angle of the interference fringes recorded on a hologram represent positional relation of a body with reference to reference light. Consequently, where a number of holograms of a number of spacially separated objects are recorded on one hologram in superposed relationship, it is possible to separately reproduce the images of these objects.

At the time of multiplex recording informations of a number of objects on a single hologram, when the objects are sequentially recorded at a definite position while sequentially varying the angular distance and the orientation angle with reference to the reference light, respective interference fringes are coherently recorded at many times on the hologram. When the record is irradiated with reproducing light from a given angular distance and orientation angle, corresponding images of the bodies can be reproduced at their original positions. When a hologram is prepared with a computer by applying this principle, it is possible to obtain a coherently multi-recorded hologram.

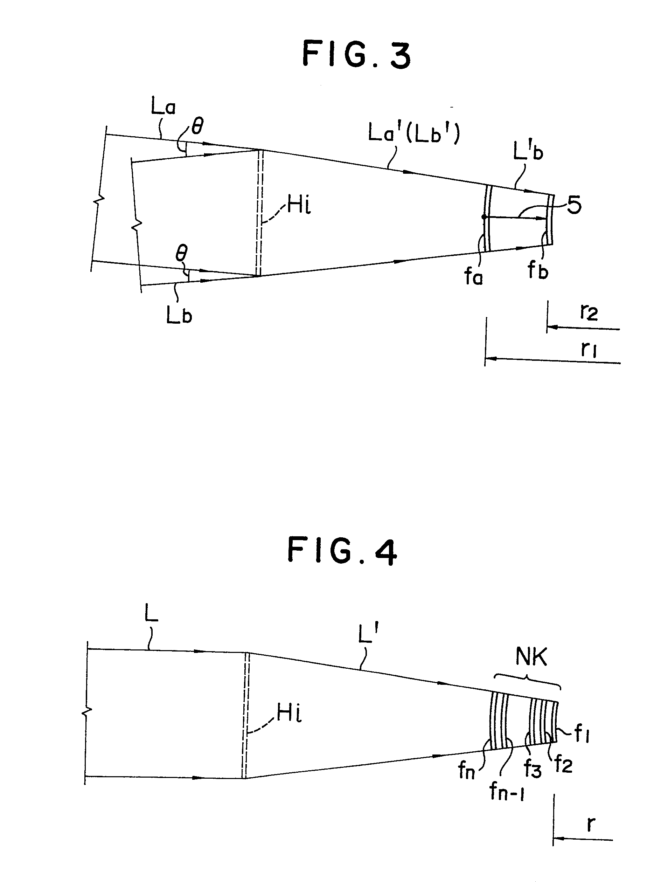

When irradiated with reproducing light La in a given direction, a partial hologram thus obtained can produce the real image of a partial single spherical optical shell $f_a$, that is a part of the single spherical light shell 1K' can be produced as shown in Fig. 3. When reproducing light Lb is projected in a direction displaced by θ from the orientation angle, a partial single spherical light shell $f_b$ which is a part of a reduced single spherical light shell 1K' can be obtained. Where reproducing light which varies continuously or intermittently from La to Lb is applied to a hologram Hi obtained by continuously or intermittently and incoherently recording in multiple, it is possible to continuously or intermittently vary the partial single spherical light shell, that is a part of the single spherical light shell from $f_a$ to $f_b$. As an alternative, where a partial hologram Hi that can be varied mechanically or electronically is used, even with the same reproducing light L, the partial single spherical light shell can be varied continuously or intermittently from $f_a$ to $f_b$.

The radius r of the single spherical light shell 1K' formed by assembling a plurality of partial single spherical light shells can be freely increased or decreased.

Embodiment 2: Method of entrapping substance in a multilayer light shell by using holography technique

Entrapping of substance can be made more efficiently where the single light shell 1K' shown in embodiment 1 is changed into a multilayer light shell NK'. To form a multilayer light shell, each partial hologram Hi is irradiated with reproducing light from outside in the same manner as in Fig. 1 to form partial multilayer light shells Nk' as the real image of holography. Then, a closed multilayer light shell NK' can be obtained as the assembly of the partial light shells. It is to be noted that in the case of a single light shell 1K', a partial light shell corresponding to a partial hologram Hi may be a single layer real image, but in the case of a multilayer light shell NK', multilayer (n layers) real images must be obtained corresponding to partial holograms H. The multilayer real image can be obtained by a method utilizing multi-records of the hologram and the multi-focused images thereof. For the sake of simplicity, in the following, instead of a multilayer light shell NK', a concentric multilayer spherical light shell NK will be described as an example.

As has been described in connection with embodiment 1, according to hologram, multiple recordings and multiply focused images are possible. As shown in Fig. 4, to simultaneously obtain multilayer real images $f_1$, $f_2$, ....., $f_n$ with a single reproducing light L, informations are coherently recorded in multiplex on the partial hologram Hi. More particularly, when a number of objects are simultaneously illuminated, and a number of interference fringes formed by lights reflected by the objects and a single reference light are simultaneously recorded on a single hologram, the information of these objects would be coherently recorded in multiple, thus enabling simultaneous reproduction of these objects by a single reproducing light.

When a partial hologram Hi in which n multilayer real images of from $f_1$ to $f_n$ that constitute a partial multilayer spherical light shell are coherently recorded as multilayers are prepared with a computer based on the above described principle, such partial hologram Hi can focus desired multilayer real images with a single reproducing light L. Fig. 4 shows a hologram obtained by simultaneously converting into real images partial multilayer spherical light shells Nk ($f_1$, $f_2$, ....., $f_n$) of a multilayer spherical optical layer NK by projecting a single reproducing light L upon the partial hologram Hi. In this manner, a multilayer spherical light shell NK made up of an assembly of partial multilayer spherical light shells Nk corresponding to a multilayer real image thus obtained can be formed in a desired space.

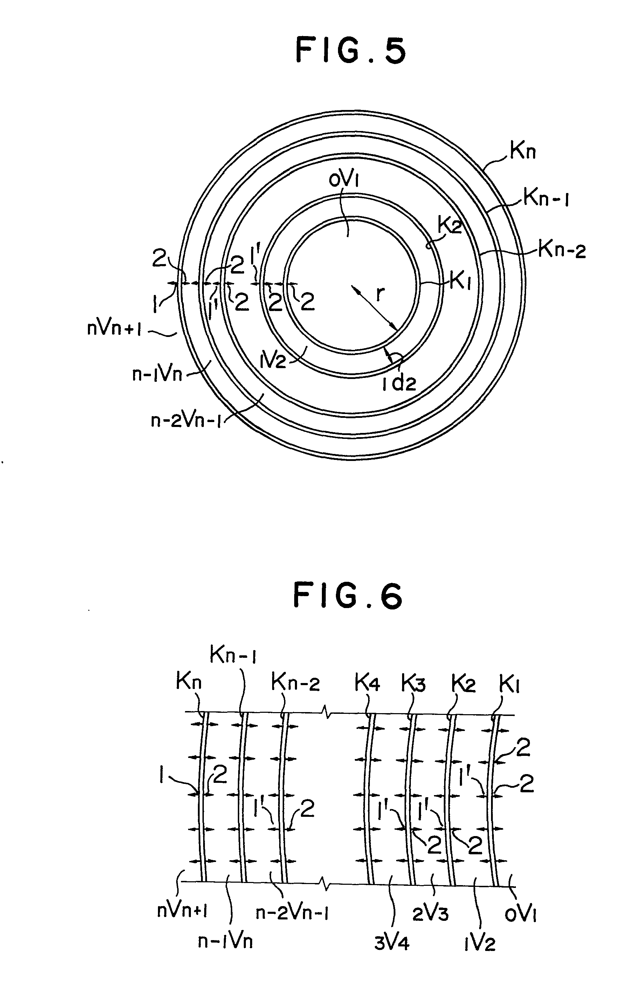

Fig. 5 is a sectional view showing the multilayer spherical light shell formed by the method just described. Since a first spherical light shell $K_1$ can be deemed as the single spherical light shell 1K, about one half of the plasma (one of the examples of groups of substance particles) near the first spherical light shell $K_1$ in an inner space ${}_oV_1$ is accelerated toward inner side while the other one half is accelerated toward outside by explosion and explosive compression phenomena. As a consequence, in an n layer spherical light shell NK, where plasma presents only in the inner space ${}_oV_1$ (first case), flowing out of the plasma to the outer space is blocked by the explosive compression 2 of respective spherical light shells $K_1$ - $K_n$ so that the quantity of flowing out is reduced to 1/2 when the plasma passes through each spherical light shell. Thus the quantity of plasma flowing out to the outside space ${}_nV_{n+1}$ through n layers of optical light shells NK amounts to $(1/2)^n$ times. Assuming that n = 20, for example the plasma density $\rho_{20}$ flowing out to the outside space ${}_{20}V_{21}$ of multilayer optical light shell 20K becomes $\rho_{20} = (1/2)^{20} \doteqdot 1/(1.05 \times 10^6)$, that is about 1/1,050,000, in which the size of the inner space ${}_oV_1$ is assumed to be unity. In the same manner where n = 30, the plasma density becomes about 1/1,073,000,000.

A case (second case) wherein the plasma is dispersed not only in the inner space ${}_oV_1$ but also dispersed homogenously throughout all spaces will be discussed. Since the plasma heated by each spherical optical shell is accelerated on both sides thereof, in a space ${}_1V_2$ between first and second spherical shells $K_1$ and $K_2$ shown in Fig. 6 the plasma would be explosively compressed toward an intermediate position in the space ${}_1V_2$. This phenomenon occurs in all spaces of ${}_oV_1$ to ${}_{n-1}V_n$.

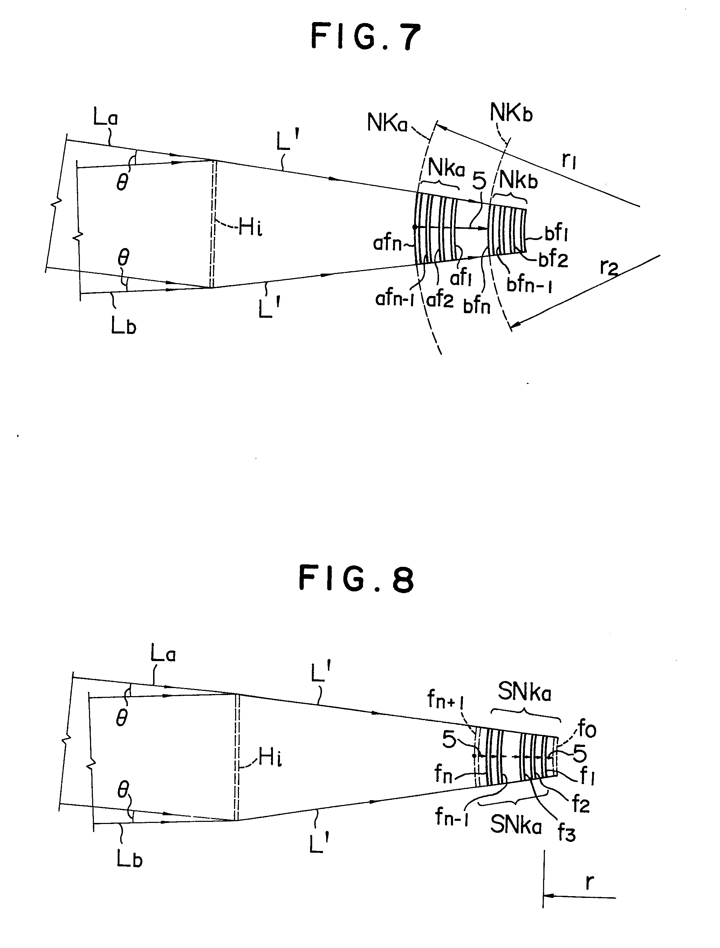

Thus, the plasma concentrates at an intermediate portion of a space between two light shells so as to form high temperature plasma layers parallel to the light shells in the multilayer spherical light shell NK. Consequently, on an average, the density of the plasma is uniform. Thus, the density is the same in the inner space ${}_{o}V_{1}$ and the outer space ${}_{n}V_{n+1}$. In this second case, a method of making different the plasma density in the inner space ${}_{o}V_{1}$ and the outer space ${}_{n}V_{n+1}$ will be described as follows. In the same manner as in embodiment 1, in which the radius r of the single spherical light shell 1K was varied, if the radius r of the multilayer spherical light shell NK were continuously or intermittently decreased, the plasma would be entrapped in a gradually decreasing volume, and the plasma density in its inner space ${}_{o}V_{1}$ would become larger than that of a case in which plasma was uniformly dispersed. This object can be accomplished by a method combining the methods of multilayer recording shown in Figs. 3 and 4. This method is illustrated in Fig. 7. More particularly, a multilayer spherical light shell $NK_a$ having a large diameter $r_1$ is formed by assembling n partial spherical light shells ${}_{a}f_{i}$ (i = 1 - n) which constitute a partial multilayer light shell $Nk_a$ so as to entrap the plasma in the inner space ${}_{o}V_{1}$. When the volume of the entrapped plasma is slightly reduced by the explosive compression 2 concurrently with the proportional reduction of radius $r_1$, the density of

plasma increases slightly. By continuously or intermittently repeating this process, the plasma density in the inner space ${}_{o}V_{1}$ can be increased gradually.

After the plasma density in the inner space ${}_{o}V_{1}$ has been increased in this manner, the succeeding mechanism of entrapping the plasma is the same as that of the first case.

As has been described hereinabove, in the embodiment 2, about 1/1,073,000,000 of the entrapped plasma flows to the outer space ${}_{n}V_{n+1}$, where the number n of the multilayer spherical light shells NK is selected to be 30, so that unless n is made to be infinity, flow out of the plasma cannot be reduced to zero. Where the quantity of plasma pushed inwardly by the explosive compression in each spherical light shell Ki is less than 1/2, the effect of entrapping decreases. Furthermore, the entrapped plasma flows out, a little by little, to the outer space ${}_{n}V_{n+1}$ with time. Yet the substance can be entrapped much more efficiently than the single spherical light shell 1K' according to the first embodiment.

Embodiment 3: <u>A method of entrapping substance in a progressive multilayer light shell by utilizing holography technique</u>

More efficient entrapping of substance becomes possible by changing the multilayer light shell NK' according to embodiment 2 into a progressive light shell. Such progressive multilayer light shell SNK' can be realized by a method substantially equal to that shown in Fig. 7.

For the sake of description, concentric progressive multilayer spherical light shells SNK will be discussed in place of the progressive multilayer light shell SNK'.

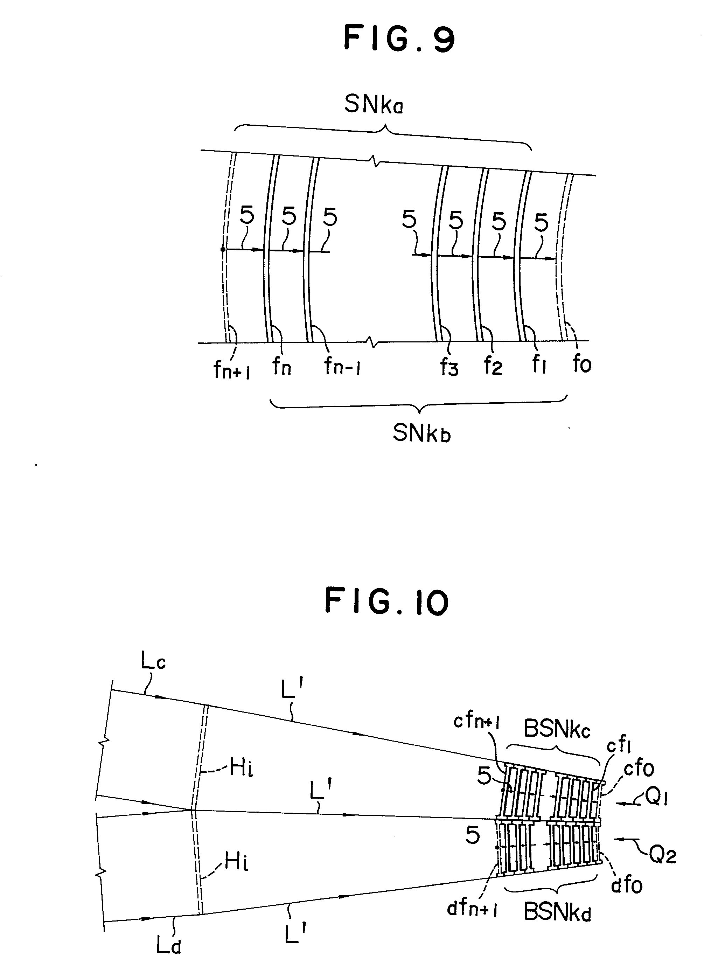

In the embodiment 2, multiple recordings on the hologram H were done by reducing the radius r so as to move (that is progress) the whole multilayer spherical light shell NK toward the center. However, it should be understood that the term "progress" used in the embodiment 3 has a different meaning. As shown in Fig. 8 the partial hologram Hi contains informations $f_1$ - $f_{n+1}$ coherently recorded in multiple, so that real images SNka of from $f_1$ to $f_{n+1}$ can be formed simultaneously with a single reproducing light La. In the same manner real images ($SNk_b$) of $f_o$ - $f_n$ can be obtained simultaneously with a single reproducing light. Fig. 9 is an enlarged view of a portion of Fig. 8. Where the orientation angle of the reproducing light is continuously or intermittently changed from position La to Lb, if the positional informations at respective time instants of the partial multilayer spherical light shell were coherently recorded in multiple, a multilayer spherical light shell made up of an assembly of a number of partial multilayer spherical light shells could be progressed continuously or intermittently. Let us consider only one real image $f_{n+1}$. The real image $f_{n+1}$ firstly formed in the space by the reproducing light La ($\theta = 0$) progresses continuously or progressively to the position of a real image $f_n$ as the orientation angle $\theta$ of the reproducing light L varies. Then the position of the real image instantly returns to the original position of the real image $f_{n+1}$ to form a newly focused image and this process is repeated. In this case, the position of the focused image varies in a range between the partial spherical light shells $f_i$ and $f_{i-1}$. When this variation is repeated for all partial spherical light shells the light shell $f_{n+1}$ moves or progresses to the light shell $f_n$ and the variation is transferred to inner cycle from $f_n$ to $f_{n-1}$. Thereafter the variation is sequentially transferred to create a phenomenon identical to a continuous movement or progress of $f_{n-2}$, $f_{n-3}$, ..$f_2$, $f_1$ and $f_0$, and the progress extinguishes at the position of light shell $f_0$.

According to this method of continuously moving the multilayer image, a real image produced at the position of $f_{n+1}$ continuously progresses toward inside and extinguishes at the position of $f_0$. When $f_{n+1}$ reaches the position $f_n$, a new real image is formed at the position of $f_{n+1}$ which successively progresses

toward inside. At this time, a portion of a (n+1) layered spherical light shell is always focused. Thus, the progressive multilayer spherical light shell SNK comprising an assembly of a plurality of partial progressive multilayer spherical light shells SNk can be formed.

A method wherein progression of the spherical light shell is effected by the cyclic operation and continuous advance can save the quantity of multiple recording of the hologram. In an electronic variable hologram using a large capacity computer this method is not always necessary. However, even in a computer system, where this method is incorporated into calculation, the capacity of the computer can be decreased.

The progressive multilayer spherical light shell SNK thus formed can entrap the plasma tending to flow out to the outside space ${}_{n}V_{n+1}$ shown in the embodiment 2 into a newly formed (n+1)th spherical light shell. More particularly, by suitably selecting the progression speed and the quantity of energy in the spherical light shell, the plasma can be efficiently moved toward inside. Thus, this progressive multilayer spherical light shell SNK can reduce to zero the quantity of plasma flowing out to the outside space. Further, where the progression speed is suitably selected, the number n of the spherical light shells can be decreased.

Embodiment 4: Method of entrapping substance by split progressive multilayer light shell by utilizing holography technique

More perfect entrapping of substance is possible by splitting the progressive multilayer light shell SNK' described in the embodiment 3. In the following, to simplify the description, a spherical light shell will be described as the light shell.

In a progressive multilayer spherical light shell SNK formed by assembling a plurality of partial progressive multilayer spherical light shells focused by partially assembling one or more partial holograms Hi (for simplicity this partial assembly is termed a partial hologram Hi), by adding the following performance to the partial progressive multilayer spherical light shell SNk formed by one partial hologram Hi, a partial split progressive multilayer spherical light shell BSNk can be obtained, and by assembling a plurality of light shells BSNk, a split progressive multilayer spherical light shell BSNK can be formed.

Accordingly, where a partial split progressive multilayer spherical light shell BSNk formed by focusing a single partial hologram Hi is split into one or more parts, each part can be used as a unit of the partial split progressive multilayer spherical light shell BSNk. In this case, although the number of split units increases, for the sake of simplicity, a part formed by focusing a single partial hologram Hi is taken as one split unit (in the case of the electronic variable hologram it can be divided into more than 2 units).

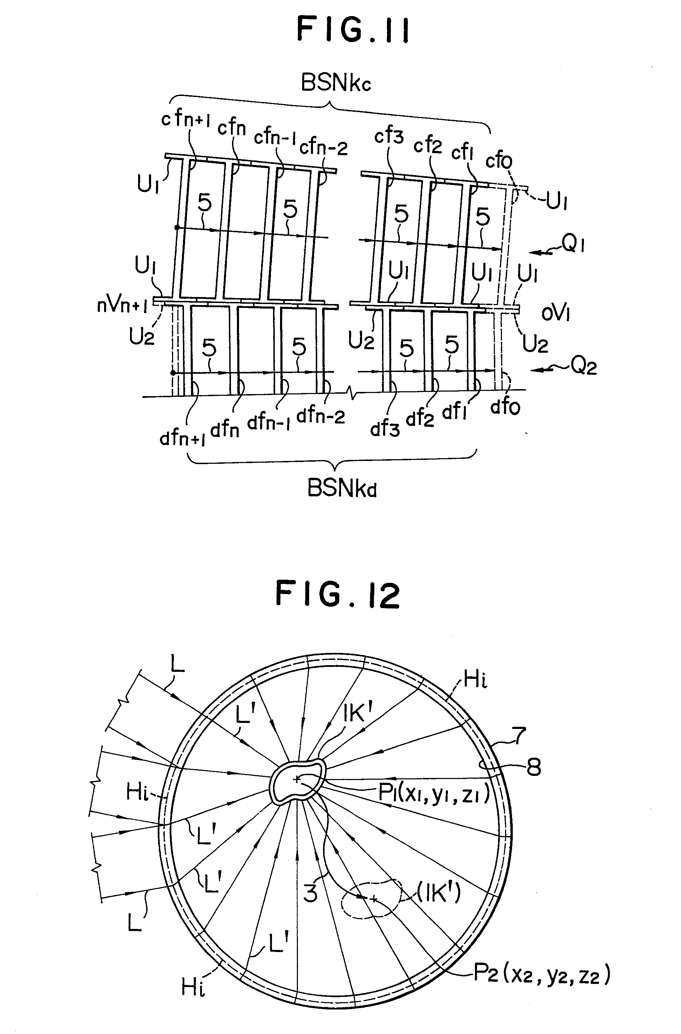

Fig. 10 is a sectional view showing a state similar to the partial progressive multilayer spherical light shell SNk shown in Fig. 8. In the case shown in Fig. 8 according to embodiment 3, a partial progressive multilayer spherical light shell SNk progresses at the same time as the other units and hence the progressive multilayer spherical light shell constituted by gathering the units also progresses simultaneously. As shown in Fig. 10, where internal pressures $Q_1$ and $Q_2$ caused by plasma differ from each other, it is necessary to create a difference between pressures acting upon the light shell in the opposite direction to maintain balance between the opposing pressures, thereby maintaining the entire configuration of the light shell. Among the basic methods of creating pressure difference across the spherical light shell are included a method wherein the energy quantity of the spherical light shell is increased or decreased and a method wherein the progressing speed of the spherical light shell is increased or decreased. In the embodiment 3, since it is impossible to make different the progressing speeds of the parts, the former method of increasing or decreasing the energy quantity of the spherical light shell is suitable. In the embodiment 3, however, since adjacent partial progressive multilayer spherical light shells are continuous, the spaces therebetween are also continuous. As a consequence, the plasma flows out or into the shell, thus making it difficult to perfectly control the pressure difference at respective partial spherical light shells. In contrast, in the embodiment 4, a method is relied upon wherein the progressive multilayer spherical light shell SNK is perfectly split, and each split part is independent of the other split parts with reference to the space and the progressing speed. Fig. 11 is an enlarged view showing the portion shown in Fig. 10.

In Fig. 11, the difference between the plasma pressures $Q_1$ and $Q_2$ in the inner space ${}_oV_1$ can be coped with by varying the progressing speed of the split part. For the purpose of spacially isolating the partial split progressive multilayer spherical light shell $BSNk^c$ from adjacent partial split progressive multilayer spherical light shell $BSNk^d$ with reference to the motion of the plasma, light interface walls U are provided at the interfaces between adjacent parts as shown in Fig. 11. The interface wall U may be a single light layer, or 2 or more light layers. In Fig. 11 interface light walls $U_1$ and $U_2$ on both sides are merged into a single layer light wall.

With the split progressive multilayer spherical light shell BSNK having a construction as above described, it is possible to completely entrap the plasma in the light shell while maintaining the internal space ${}_oV_1$ in its desired configuration. Since the embodiment 4 relates to a split progressive multilayer light shell BSNK', any desired configuration other than sphere can be used.

Embodiment 5: Method of imparting speed by the movement of a single spherical light shell 1K' utilizing holography technique

As has been pointed out in connection with embodiment 1, it is possible to form a closed single light shell 1K' having any configuration and thickness $\Delta d$ in a space inside of a spherical hologram made up of an assembly of many partial holograms Hi. Furthermore, the fact that substance, typically a plasma can be inertially entrapped in the space inside of the single light shell 1K' has also been shown in embodiment 1. According to this embodiment 5, it is possible to change the position of the entrapped plasma, that is to impart speed thereto by using the single light shell 1K'.

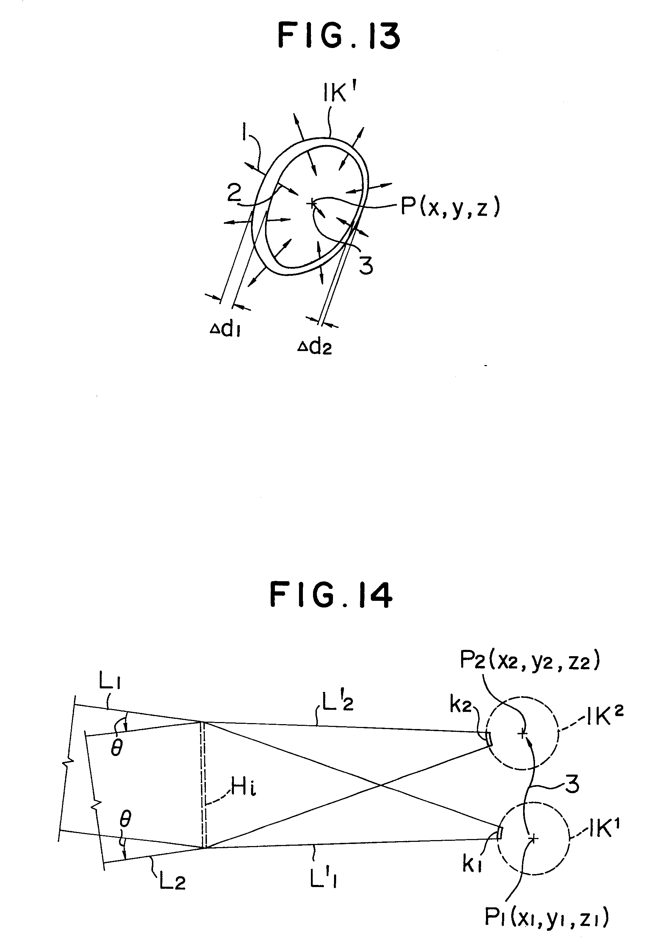

More particularly, as shown in Fig. 12, the plasma entrapped in the single light shell 1K' by explosive compression is heated continuously by the single light shell 1K' so that the plasma would be continuously subjected to the action of the explosive compression. However, where the plasma density in the internal space is larger than that in the external space, the plasma flows out with time. For this reason, during this interval the plasma in the light shell would be subjected to the entrapping force caused by the explosive compression. As shown in Fig. 13, where the energy quantity on one side of the single light shell 1K' is made larger than that on the other side, the force caused by the explosive compression 2 acts on one side to move the center of gravity P(x, y, z) of the inside plasma group as shown by an arrow 3. By causing the single light shell 1K' to follow up the internal plasma group whose center of gravity P has been moved, the force can be applied thereby moving the plasma group. The adjustment of the single light shell 1K' and the energy quantity is made as follows. The energy quantity can be adjusted by adjusting the energy quantity of the reproducing energy or by adjusting the spacial distribution of the energy. A method of multiple recording and reproducing of the hologram can be used for moving the single light shell 1K'.

Fig. 14 shows such states.

To move the center $P_1(x_1, y_1, z_1)$ of a single light shell 1K' formed in a space inside of a spherical hologram H formed by assembling a plurality of partial holograms Hi, the method of multiple recording and reproducing of a hologram can be used. It is now assumed that, in Fig. 14, when reproducing light $L_1$ is irradiated upon a multiply recorded partial hologram Hi, a partial single light shell $k_1$ is obtained, and that another partial single light shell $k_2$ is obtained with reproducing light $L_2$ obtained by varying reproducing light $L_1$ by an orientation angle $\theta$. Since these partial single light shells $k_1$ and $k_2$ can be obtained by using a coherently and multiply recorded partial hologram Hi, these partial single light shells $k_1$ and $k_2$ correspond to reproducing lights $L_1$ and $L_2$ respectively, while the image of an intermediate partial single light shell k can be obtained by using reproducing light at an intermediate orientation angle. Consequently, the single light shell 1K' comprising an assembly of a plurality of partial single light shells k can be formed in the same manner, and its center is moved continuously from point $P_1(x_1, y_1, z_1)$ to point $P_2(x_2, y_2, z_2)$. In another method a variable hologram can be used.

Where a mechanical or electronically variable hologram is used, the orientation of the reproducing angle may be constant.

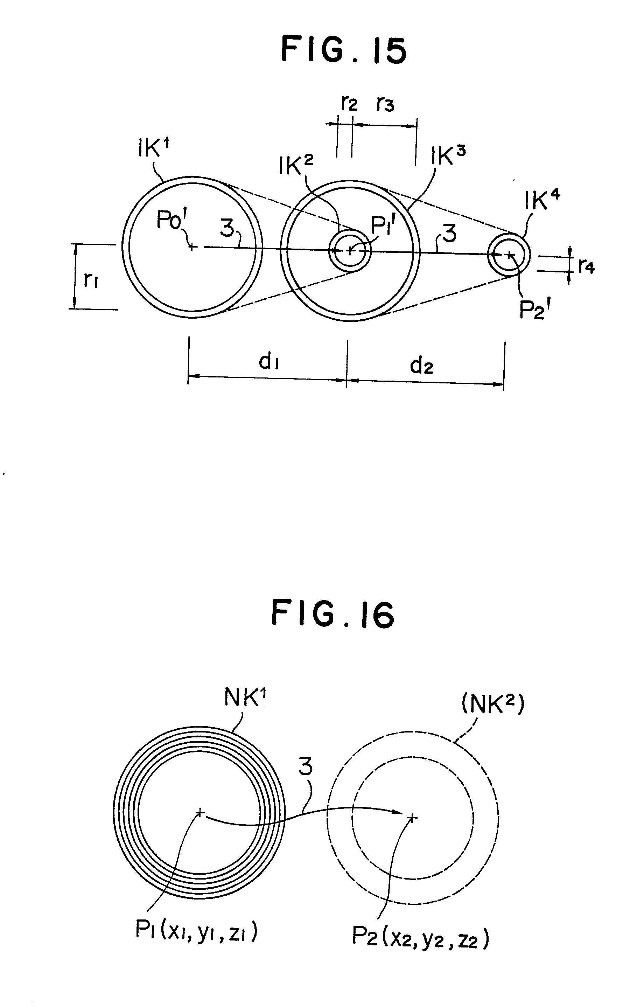

Fig. 15 is a diagram showing a method of moving the plasma by moving the single spherical light shell 1K which is made possible by the method described above. At first, the plasma is entrapped in a single spherical light shell 1K' having a large radius r, and the light shell is moved over a distance $d_1$ while gradually decreasing the radius. For the purpose of entrapping again the plasma gradually flown out to the outside (it is assumed that the plasma on the outside is distributed uniformly) during the movement, the single spherical light shell is extinguished while at the same time a new single spherical light shell $1K^3$ having a larger radius $r_3$ is generated. By repeating this operation, it is possible to extend the sustaining time during which the plasma is entrapped. As a consequence, the distance of moving the plasma by giving it speed can also be increased.

The above described single spherical light shell 1K not only can entrap the substance over a definite interval, but also can impart a speed to the substance. Further, when this method is used in combination with the method of increasing or decreasing the radius r of the single spherical light shell 1K', it is possible to increase the interval during which the substance is entrapped and moved.

The same is true for a single light shell 1K'.

Embodiment 6: A method of imparting speed to substance by the movement of a multilayer light shell utilizing holography technique

The method of imparting speed to substance by the movement of the single light shell 1K' according to embodiment 5 becomes more efficient by utilizing the multilayer light shell NK' according to embodiment 2. For the sake of simplicity in the following, a multilayer spherical light shell NK' will be described instead of a multilayer light shell NK, and a plasma is used as the substance.

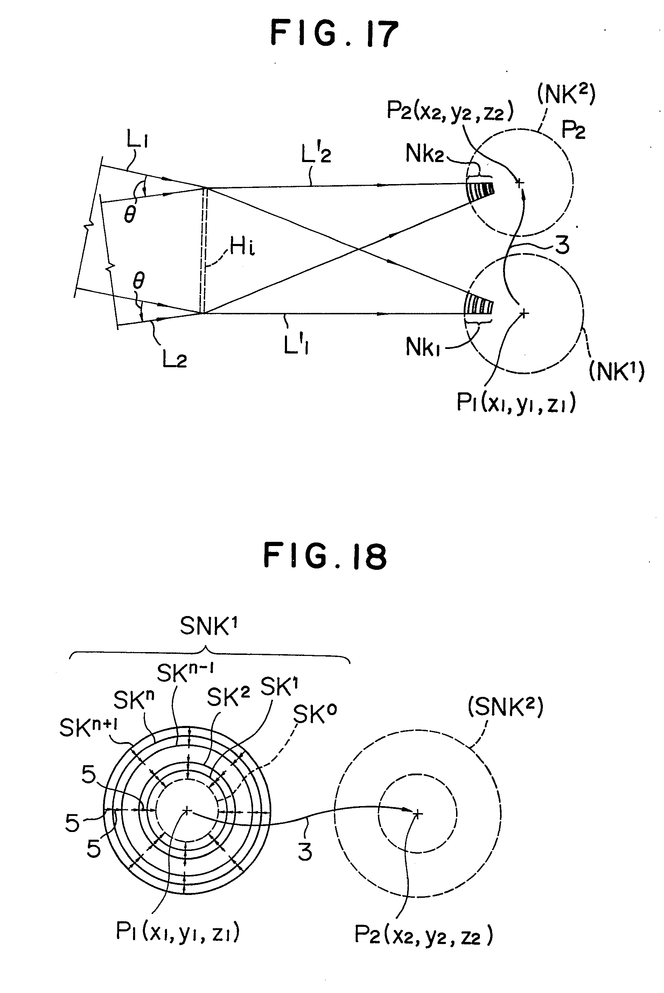

Fig. 16 is a diagrammatic representation showing the movement in the direction shown by arrow 3 of the plasma entrapped in the multilayer spherical light shell NK'. As has been described in embodiment 2, the multilayer spherical light shell NK' can entrap at a higher efficiency than the single spherical light shell 1K. Accordingly, where a method of maldistributing the energy quantity in a light shell as shown in Fig. 13 is applied to the multilayer spherical light shell NK', it is possible to impart speed to the center of gravity $P_1$ (see Fig. 16) of the entrapped plasma. The movement and energy quantity of the multilayer spherical light shell NK' can be adjusted as follows. The energy quantity can be adjusted in the same manner as in embodiment 5. The movement of the multilayer spherical light shell can be effected by substantially the same method as shown in Fig. 15, but instead of using the partial single spherical light shells k comprising the single spherical light shell 1K, a coherently and multiply recorded partial hologram Hi is used to form a partial multilayer spherical light shell Nk and then a plurality of the light shells Nk are assembled to obtain a multilayer spherical light shell NK. Fig. 17 shows this state. As shown in Fig. 4 of embodiment 2, by irradiating a single reproducing light L upon the coherently multi-recorded partial hologram Hi, a partial multilayer spherical light shell Nk can be obtained, and by assembling a number of the partial multilayer spherical light shells Nk, a multilayer spherical light shell NK' can be obtained. With this method, as shown in Fig. 17, a partial multilayer spherical light shell $NK_2$ corresponding to the reproducing light $L_1$ can be obtained and a multilayer spherical light shell $Nk_1$ can be formed by assembling a plurality of light shells $Nk_1$. After that, a partial multilayer spherical light shell $Nk_2$ corresponding to reproducing light $L_2$ is obtained and a multilayer spherical light shell $NK_2$ can be obtained by assembling a number of the light shells $Nk_2$.

By continuously varying the orientation angle $\theta$

of the reproducing light for the multilayer spherical light shells $NK_1$ and $NK_2$ thus prepared, the center of the light shell $P_1(x_1, y_1, z_1)$ can be continuously moved to a point $P_2(x_2, y_2, z_2)$.

Embodiment 7: A method of imparting speed to substance by the movement of a progressive multilayer optical shell SNK' utilizing holography technique

The method of imparting speed (or velocity) to substance by the movement of the multilayer light shell NK' according to embodiment 6 can be made to be more efficient by utilizing the progressive multilayer optical shell SNK' according to embodiment 3.

In the following, for the sake of simplicity a progressive multilayer spherical light shell SNK is described instead of the progressive multilayer light shell SNK' and a plasma is used as the substance.

As has been pointed out in connection with embodiment 3, the progressive multilayer spherical light shell SNK can entrap therein the plasma at a higher efficiency than the multilayer spherical light shell NK.

Consequently, when the method of maldistributing the energy shown in Fig. 13 is applied to a progressive multilayer spherical light shell SNK' shown in Fig. 18 in the same manner as in embodiment 6, it is possible to impart speed to the center of gravity $P_1(x_1, y_1, z_1)$ of the entrapped plasma so as to move it to point $P_2(x_2, y_2, z_2)$. The adjustments of the progressive multilayer spherical light shell SNK and the energy quantity are made in the following manner.

The energy quantity can be adjusted by the same manner as that described in connection with the embodiments 5 and 6, whereas the movement of the progressive multilayer spherical light shell SNK is accomplished by a combination of the method shown in Fig. 8 according to embodiment 3 and the method shown in Fig. 17 according to embodiment 6. Thus, according to the method shown in Fig. 8, the information regarding the position (a position toward the center of concentric shells) of the partial multilayer spherical light shell Nk which is formed by incoherently and multiply recording on a partial hologram (when the position varies a partial progressive multilayer spherical light shell SNk would be obtained) is caused to be focused at a position which varies with time by varying the orientation angle θ of the reproducing light L. According to the method shown in Fig. 17 the information regarding the position of the center P, which varies with time, of the partial multilayer spherical light shell NK obtained by incoherently and multiply recording on a partial hologram (the light shell becomes SNk with time) is caused to be focused at a position which varies with time by varying the orientation angle of the reproducing light L. In other words, the methods shown in Figs. 8 and 17 are the same in principle.

Accordingly, to simultaneously apply the same method to two objects, the orientation angle $\theta$ is taken on X and Y axes of the rectangular coordinates, and the informations regarding the two objects are incoherently and multiply recorded on a partial hologram Hi.

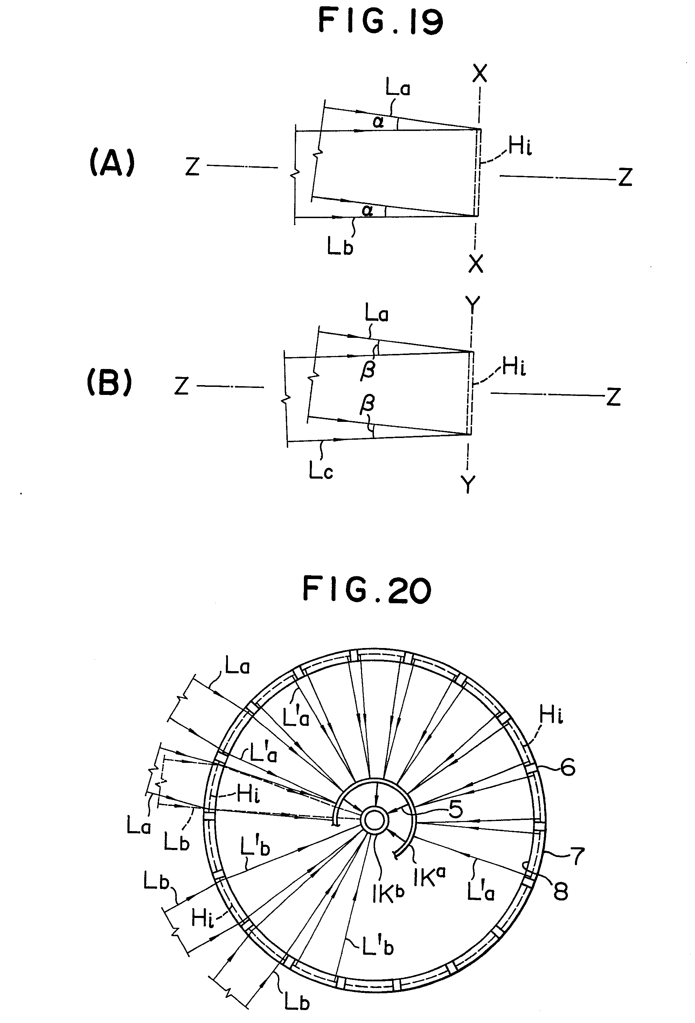

Figs. 19A and 19B are graphs showing the relation between the reproducing light and the partial hologram Hi. Fig. 19A shows the relation between a reproducing light La and a reproducing light Lb obtained by varying the orientation angle of the reproducing light La by an angle $\alpha$ along X axis for attaining one object, while Fig. 19B shows the relation between the reproducing light La and a reproducing light Lc obtained by varying the orientation angle of the reproducing light La by an angle $\beta$ along Y axis for attaining the other object. In other words, for the one object, angle $\alpha$ is varied as shown in Fig. 19A and for the other object, angle $\beta$ is varied as shown in Fig. 19B. Furthermore, for accomplishing the other object, the angle $\alpha$ is made zero while the

angle $\beta$ alone is varied. According to another method, instead of varying the orientation angle of the reproducing light, a variable hologram is used. Where a mechanical or electronic variable hologram is used, as a principle, any desired real image can be obtained with only one reproducing light. It is also possible to use a method comprising a combination of the method of changing the orientation angle of the reproducing light and the method of using the variable hologram.

Thus it is possible to obtain a desired movable progressive multilayer spherical shell SNK by assembling a plurality of movable progressive partial multilayer spherical light shells obtained by the methods described above. A movable progressive multilayer light shell SNK' can be obtained by a simple method.

Embodiment 8: Method of imparting speed or velocity by the movement of a split progressive multilayer light shell BSNK' by utilizing holography technique

The efficiency of imparting speed to substance by the movement of the progressive multilayer spherical light shell SNK' according to embodiment 7 can be improved by utilizing the split progressive multilayer spherical light shell BSNK' according to embodiment 4. In the following, for the sake of simplicity, a spherical light shell will be described as the light shell and plasma will be described as substance.

As has been pointed out hereinabove in connection with embodiment 4, the split progressive multilayer spherical light shell BSNK can more perfectly entrap the plasma than the progressive multilayer spherical light shell SNK. As has been described in connection with embodiment 4, the split progressive multilayer spherical light shell BNK has a performance capable of coping with a pressure difference at a portion of the inner space ${}_{o}V_{1}$. Accordingly, it is possible to impart speed to the plasma entrapped in the inner space by moving the split progressive multilayer spherical light shell BSNK while manifesting such performance. The method of moving the split progressive multilayer spherical light shell is similar to that of the progressive multilayer spherical light shell SNK according to embodiment 7 except that although the embodiment 7 has a limitation that regarding adjacent partial progressive spherical light shells SNk, the progressions of these light shells toward the center of the multilayer shells must move in the same phase, but in the split progressive multilayer spherical light shell BSNK, there is no such limitation so that adjacent partial split progressive multilayer spherical light shells BSNk may have progression speeds of independent phases. Accordingly, it becomes possible to adequately cope with the internal pressure difference (or exterior pressure difference - when the direction of progression is reversed, the sign of the pressure becomes opposite). The number of splits or divisions is equal to the upper limit of the number of partial holograms where a fixed hologram is used because for independently operating respective splits it is necessary to use independent reproducing lights on the assumption that one reproducing light is used for one partial hologram. However, where an electronic variable hologram is used,as it is possible to obtain any desired image with definite reproducing light there is no limit for the number of splits. Where a variable hologram, especially computer controlled electronic variable hologram having a large freedom is used, all performances of embodiments 1 through 8 can be provided for the same apparatus.

Embodiment 9: Method and apparatus for effecting controlled nuclear reaction by using holography technique

Among nuclear reactions are included a nuclear fission reaction and a nuclear fusion reaction, each being realizable by enclosing nuclear fuel substance at ultra high temperatures. As an example, a nuclear fusion reaction will be described hereunder.

Availability of a controlled nuclear fusion reaction, that is a nuclear fusion reactor is now the most important problem for solving the problem of supplying industrial energy. Consequently, numerous researches regarding the solution of solving conditions necessary for the nuclear fusion reaction have been made, and many papers regarding thereto have been published. It should be noted that one of the most important criterions is the Lawson's criterion. More particularly, Lawson has found that in the case of a mixed nuclear fuel of deuterium and tritium, for the purpose of satisfying the critical condition (a limit point at which plasma becomes to balance with energy) the product of the density of the mixture and the entrapping time should be equal to $10^{14}$ sec./cubic centimeter at a temperature higher than the ignition or trigger temperature. Later investigations have added various other conditions but values very close to the Lawson's criterion were obtained. The ignition temperature of the mixed nuclear fuel of deuterium and tritium is said to be about 40,000,000 °C. Certain other nuclear fuels require ignition temperatures of about 100,000,000 °C.

As above described, essential conditions necessary to realize nuclear fusion reactors are to heat the nuclear fuel plasma to ultra high temperatures, and to control the entrapping of the plasma at the ultra high temperatures.

Prior art techniques for entrapping ultra high temperature plasma include a method of magnetically entrapping by using magnetic lines of force, and such method of inertially entrapping as laser nuclear fusion and ion beam nuclear fusion. The magnetic entrapping method is advantageous in that the plasma entrapping time is relatively long, while the inertial entrapping method is advantageous in that the plasma density is high. However, the advantage of these two methods is either one of the long entrapping time or the high plasma density, so that high efficiency cannot be expected.

According to this embodiment 9, the nuclear fuel plasma is heated to ultra high temperatures and the ultra high temperature entrapping is controlled by using the holography technique.

An inertial entrapping type nuclear fusion reactor can be realized by using embodiment 1. According to embodiment 1, a system similar to a prior art inertial entrapping system in which nuclear fuel pellets are irradiated or projected with a laser beam or ion beam can be realized by utilizing holography.

In the inertial nuclear fusion reaction, at the time of irradiating pellets, the outer shells of the pellets are heated so as to heat and compress the inside nuclear fuel by the explosive compression. The heating, compression and inertial entrapping satisfy the Lawson's criterion, thus igniting the nuclear fusion reaction for deriving out tremendous energy. According to one method of embodiment 9, heating of the spherical shell required for the explosive compression is accomplished by a single spherical light shell 1K' of embodiment 1. In a single spherical light shell 1K' utilizing the holography technique, spherical shell shaped heating can be geometrically realized at any position in a definite space region.

Fig. 20 is a cross-sectional view showing one example thereof. In Fig. 20, a single spherical light shell $1K^a$ formed as a real image of a large diameter at the central portion by the method of embodiment 1 can entrap therein a low density nuclear fuel gas or nuclear fuel plasma injected into the space within concentric evacuated vessels 6, 7 and 8. Then the radius of the shell is decreased to reach a single spherical light shell $1K^b$ by continuing the heating, compression and entrapping the plasma. During this course the nuclear fusion reaction is ignited thus enabling to derive out energy. In the prior art inertial trapping system, since the entrapping time is very short, about $10^{-8}$ sec., for example, the density of the nuclear fuel should be increased to about $10^3$ - $10^4$ times of that of solid which accompanies various difficulties. However, in the method of this embodiment 9 utilizing a single spherical light

shell 1K whose radius can be varied, the position of heating by the single spherical light shell 1K is geometrically stable, and moreover since it is possible to continuously heat as desired, the entrapping time can be made much longer than about $10^{-8}$ second. As a consequence, as it is not necessary to compress the nuclear fuel to a value of $10^{3}$ - $10^{4}$ times of the solid density, the difficulty of reaching the critical condition can be greatly reduced. Furthermore, the energy of the single spherical light shell 1K can be increased by increasing the amplitude and the number of oscillations of the electromagnetic wave used.

Thus, as a principle, the method of this embodiment 9 has a large utility.

By generating in a pulse form the nuclear fusion capable of creating in a manner described above, a controlled nuclear fusion reaction can be realized.

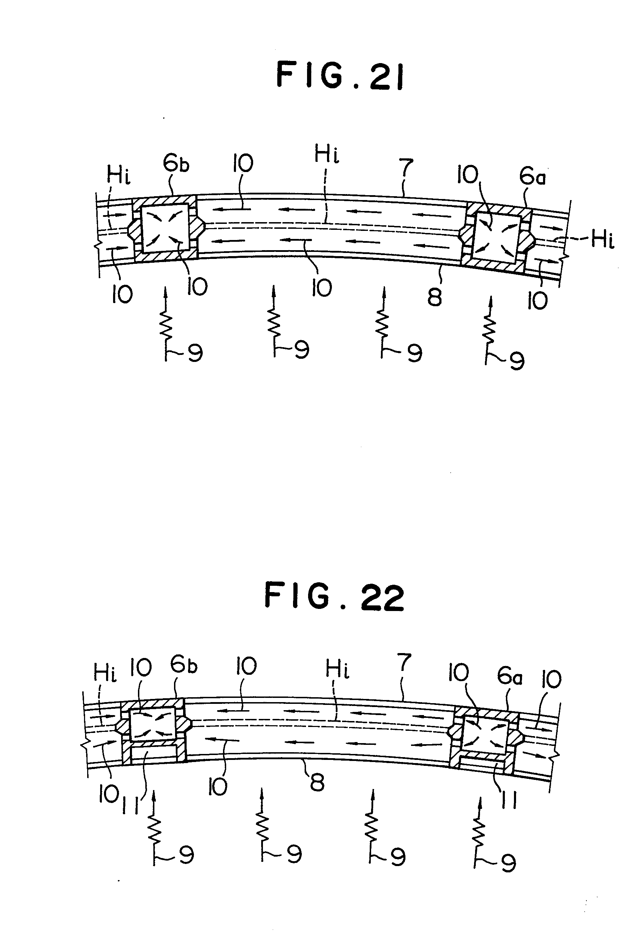

A method of deriving out energy generated by the nuclear fusion reaction will now be described. As shown in Fig. 20, the energy generated in the single spherical light shell $1K^{b}$ by the nuclear fusion reaction is spherically radiated as an electromagnetic wave, and a portion of the energy is derived out to the outside of the evacuated vessels 6, 7 and 8 as a burnt plasma. The electromagnetically radiated energy will now be discussed in detail. Fig. 20 shows a method of deriving out the electromagnetic wave energy generated by the nuclear fusion reaction by a medium flowing through a space between the evacuated vessels 7 and 8. In this case, gas or fluid is used as the medium, but a mixture thereof can also be used. Fig. 21 is a diagram showing an enlarged view of a portion of vessels 6, 7 and 8. Thus a space is defined between the outer and inner vessels 7 and 8 and gas (for example, helium which is inert gas) is passed through the space. A plurality of circumferentially spaced frames 6a, 6b, .... (each having a hollow square cross-section) are provided for the vessels 7 and 8, and gas 10 flowing out of the inner duct of the frame 6a flows between the outer and inner vessels 7 and 8 and cools these vessels and the partial hologram Hi. Thereafter, the gas flows into the inner duct of the frame 6b. Consequently, the energy of electromagnetic radiation 9 generated by the nuclear fusion reaction is absorbed by the evacuated vessels 6, 7 and 8 and the gas flow 10 and derived out to the outside by using the gas flow 10 as a medium. Thereafter, the heat energy absorbed by the gas flow 10 is used for electric power generation, for example, by well known method. The density of the gas acting as the heat medium should be small sufficient to further decrease the reproducing light L and diffraction light L' passing through the partial hologram Hi. In this case it is possible to increase the capacity of the gas as the heat medium by increasing the flow speed of the gas. Although it is possible to use liquid instead of gas, in this case care should be taken not to generate bubbles and not to decrease the performances of the reproducing light L and the diffraction light L' passing through the partial hologram Hi. Further it is possible to directly generate electric power by using thermocouples and without using any medium.

Fig. 22 shows one example of using gas or liquid as the heat medium. In this case, a portion of the inner side of frame 6a is utilized as a fluid passage 11 for strongly cooling the evacuated vessels 6, 7 and 8 and for absorbing the electromagnetic radiations 9 created by the nuclear fusion reaction.

Since this portion is not used as the path for the reproducing light L and the diffraction light L' passing through the partial hologram Hi, it is free to pass liquid therethrough. Instead of the liquid, high density gas can be passed.

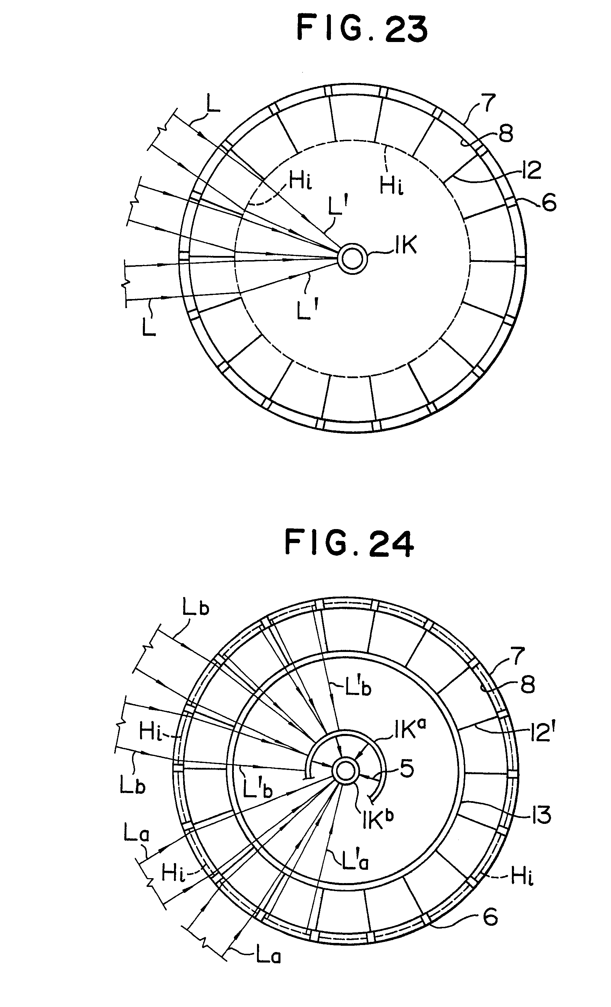

Fig. 23 is a cross-sectional view showing one example in which the evacuated vessels 6, 7 and 8 shown in Fig. 20 are spacially spaced from the partial hologram Hi. In the first case of this example, the interference fringes of the hologram H comprising an assembly of partial holograms Hi are spacially spaced apart or gaps are formed between adjacent partial holograms Hi for the purpose of permitting the hologram H to pass nuclear fuel gas (or plasma, but not at super high temperatures). In the second case, the hologram H does not pass gas but acts as an evacuated vessel. In the first case, the reproducing light L and the electromagnetic radiations created by the nuclear fusion reaction are cooled and the energy is derived out through the evacuated vessel. In this case, as there is a fear that the nuclear fuel gas as deuterium tends to corrode the hologram H, a hologram supporting structure 12 and the inner wall 8' of the evacuated vessel, it is necessary to use corrosion resistant material for these portions. In the second case, as the hologram H itself acts as the evacuated vessel, the freedom of selection of the materials on the outside of the hologram H is increased. In this case, the evacuated vessel would have a double wall construction comprising inner and outer vessels, cooling and energy deriving out being made at the outer evacuated vessel in the same manner as in the first case.

Fig. 24 is a cross-sectional view showing a modification of Fig. 23 wherein the evacuated vessel and the hologram are spacially spaced apart. In Fig.

24, the hologram is arranged on the outside. In this case evacuated vessels 6, 7 and 8 similar to those shown in Fig. 20 are disposed on the outside for permitting passage of the reproducing light L and the diffraction light L'. Since an inner evacuated vessel 13 is provided, nuclear fuel gas or plasma (not at super high temperature) is entrapped therein. Accordingly, on the outside of the vessel 13 there is no fear of corroding the material caused by the nuclear fuel gas. Thus, the degree of freedom regarding materials used increases. Where the heat of electromagnetic radiations created by the nuclear fusion reaction is absorbed at the position of the evacuated vessel 13, that is where the heat absorbing device is incorporated at that position, the cooling capacity at the positions of the outer evacuated vessels 6, 7 and 8 can be decreased.

In Fig. 24, the real image produced by the reproducing light La is a single spherical light shell $1K^a$, while the real image produced by the reproducing light Lb dephased by an orientation angle θ from the reproducing light La is a single spherical light shell $1K^b$. At first, the single spherical light shell $1K^a$ is formed by the reproducing light La for entrapping a large quantity of the nuclear fuel gas (or plasma, not high temperatures). Then the orientation angle of the reproducing light La is continuously varied over an angle θ to reach the position of the reproducing light Lb. Then the single spherical light shell $1K^a$ gradually decreases its volume to form the single spherical light shell $1K^b$ entrapping therein the plasma while gradually increasing the plasma density. However, after that since the entrapped plasma gradually flows out with time, entrapping over a long period is difficult.

It is possible to form a nuclear fusion reactor by entrapping plasma by using embodiment 2.

The system utilizing embodiment 2 constitutes an improvement of the system utilizing embodiment 1. More particularly, a multilayer spherical light shell NK according to embodiment 2 can entrap the plasma at a higher efficiency than the single spherical light shell 1K according to embodiment 1. Thus, use of the multilayer spherical light shell NK not only enables to heat the plasma but also enables to readily improve the plasma density as well as the entrapping time. Other conditions and apparatus are similar to those of embodiment 1.

It is possible to entrap plasma by utilizing embodiment 3 for preparing a nuclear fusion reactor. A system utilizing embodiment 3 constitutes an improvement of the system utilizing embodiment 2. Thus, the progressive nultilayer spherical light shell SNK according to embodiment 3 can entrap the plasma at higher efficiencies than the multilayer spherical light shell NK according to embodiment 2. More particularly, use of the progressive multilayer spherical light shell SNK not only enables to heat the plasma but also enables to readily improve the plasma density and the entrapping time. Moreover, the progressive multilayer spherical light shell SNK can entrap therein external plasma or conversely take out entrapped plasma to the outside by adjusting its progression speed. Consequently, where this performance is utlized, if it is desired to increase the internal plasma density, different from the single spherical light shell 1K and the multilayer spherical light shell NK, it is not always necessary to reduce their radius r (radius r may be varied) and it is possible to discharge the inner plasma to the outside for decreasing the inner plasma density, thus enabling finer adjustment. Other conditions and apparatus are identical to those used in embodiment 1.

It is possible to entrap plasma by utilizing embodiment 4 to form a nuclear fusion reactor. The system utilizing embodiment 4 constitutes an improvement of a system utilizing embodiment 3. A split progressive multilayer spherical light shell BSNK according to embodiment 4 can entrap plasma more completely than the progressive multilayer spherical light shell SNK according to embodiment 3. More particularly, use of the split progressive multilayer spherical light shell BSNK not only enables to heat the plasma but also to freely control the density and entrapping time of the plasma so that it is possible to effect nuclear fusion reactions utilizing various types of nuclear fuels. Accordingly, in principle, a nuclear fusion reaction such as P-B reaction not accompanying neutrons is possible.

This is extremely important for industry because if a nuclear fusion reaction not accompanying neutrons could be used practically, perfectly clean nuclear fusion electric power generation would become possible, thus perfectly solving the problem of energy on the earth. Other conditions and apparatus are identical to those used in embodiment 1.

It is also possible to entrap the plasma for providing a nuclear fusion reactor by using embodiment 5, 6, 7 or 8. Thus the system utilizing embodiment 5 is identical to that utilizing embodiment 1. The system utilizing embodiment 6 is identical to that utilizing embodiment 2 while the system utilizing embodiment 7 is identical to that utilizing embodiment 3. In the same manner, the system utilizing embodiment 8 is identical to that utilizing embodiment 4. Further a system utilizing one or all of the embodiments 1 through 8 is also possible.

Embodiment 10: Method and apparatus for forming an evacuated working chamber of a holography working machine (disclosed in Japanese Patent Application No.62396/81) by using holography technique

Briefly stated, in the holography working machine, design informations of a product are realized as a spacial energy distribution by using holography technique (actually, a computer holography) capable of providing a spacial distribution of such wave motion energy as an electromagnetic wave, sound wave, etc., in a definite three dimensional space and then the level difference (usually a temperature difference) in the spacial distribution of the wave motion energy is utilized to actually produce a three dimensional product according to the design informations by sublimating vaporizable material.

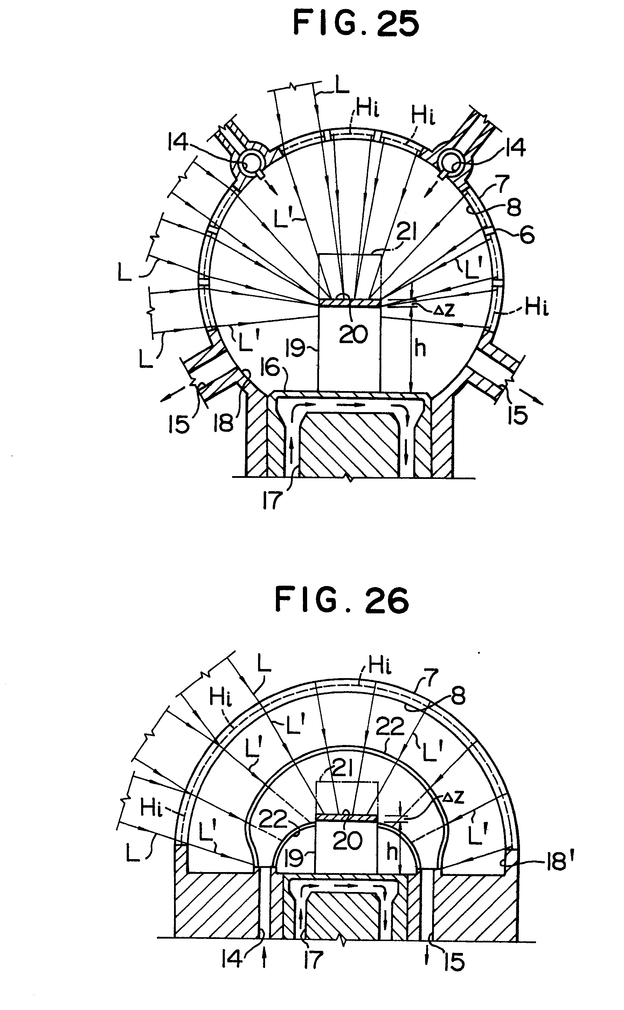

Fig. 25 is a cross-sectional view showing one example of the holography working machine.

In Fig. 25, a pedestal 16 supporting a workpiece 19 is provided at substantially the central portion of an evacuated working chamber 18, and one or more holograms Hi, one or more vaporized material supply nozzles 14 ejecting the vaporized material to a desired space and one or more vaporized material recovering nozzles 15 for recovering vaporized material remaining in the space are mounted on predetermined peripheral wall portions. The pedestal 16 is provided with a passage 17 for passing cooling medium for controlling the cooling of the pedestal. In Fig. 25 dot and dash lines 21 show the contour of the product to be manufactured, and 20 shows a section on the way of crystallization.

This embodiment 10 contemplates realization of the evacuated working chamber 18, one of the important elements of the holography working machine, by utilizing the holography technique. Since the evacuated working chamber 18 is filled with the vaporized material, in some case it may deposit on the inner wall 8.

Where the manufacturing speed is low or a small product is to be manufactured, the quantity of the vaporized material is small so that the deposition speed onto the inner wall 8 is also small. However, in order to increase the manufacturing speed, the problem of deposition of the material onto the inner wall 8 should be basically solved.

The embodiment 10 can completely solve this problem. By utilizing embodiment 4 it is possible to form, in an outer evacuated working chamber 18', an inner evacuated working chamber 22 (see Fig. 26) capable of entrapping vaporized material by using a split progressive multilayer light shell BSNK'.

Fig. 26 shows an example of the application of the embodiment 10 to the holography working machine. More particularly, by forming the inner evacuated working chamber 22 in the outer evacuated working chamber 18' the problem of depositing the vaporized material 36' onto the inner wall 8 of the outer evacuated working chamber 18' can be solved perfectly. The inner evacuated working chamber 22 utilizing the split progressive multilayer light shell BSNK' can be formed by assembling the diffraction light L' passing through respective partial holograms Hi. Where informations regarding the product are recorded on a hologram (an assembly of partial holograms Hi) together with the informations regarding the inner evacuated working chamber 22, the same hologram can be used for simultaneously focusing the real image necessary for the working. Furthermore, since the contour and dimension of the inner evacuating working chamber 22 can be changed as desired in accordance with the configuration and manufacturing steps of the product 19, wasteless machining is possible.

By utilizing embodiment 1, 2 or 3 the inner evacuated working chamber 22 entrapping the vaporized material 36' can be formed. Where the single light shell 1K' of embodiment 1 is utilized, it is impossible to perfectly entrap the vaporized material over a long interval, but it is possible to maintain the density of the vaporized material in the single light shell 1K' at a larger value than that on the outside. Where the multilayer light shell NK' according to embodiment 2 is used, the efficiency can be improved over a case utilizing the embodiment 1.

Where the progressive multilayer light shell SNK' according to embodiment 3 is used, although it is possible to completely entrap therein the vaporized material 36', in order to cope with nonuniform variation of the internal pressure it is necessary to use a method of adjusting the energy quantity of the reproducing light L. In contrast, where embodiment 4 is used extremely versatile performance can be obtained.

It is also possible to form the inner evacuated working chamber 22 capable of entrapping the vaporized material 36' by using embodiment 5, 6, 7 or 8. A system utilizing embodiment 5 is identical to that utilizing embodiment 1, and a system utilizing embodiment 6 is identical to that utilizing embodiment 2. In the same manner, a system utilizing embodiment 7 is identical to that utilizing embodiment 3 while a system utilizing embodiment 8 is identical to that utilizing embodiment 4. Furthermore, a system utilizing any one or all of the embodiments 1 through 8 can also be realized.

Embodiment 11: Apparatus for accelerating particles by using holography technique

Particle accelerating apparatus indispensable for experiments of high energy physics, therapy and industry can also be realized by using holography technique.

Prior art particle accelerating apparatus can be classified into a linear acceleration apparatus, a cyclotron, a betatron, a synchrotron and apparatus having combined performances thereof. Among them, the linear acceleration apparatus and the cyclotron accelerate electrically charged particles by using electrostatic Coulon repulsive force. The linear acceleration apparatus is constructed such that a plurality of hollow electrodes are disposed coaxially in vacuum, and that charged particles injected into the apparatus are sequentially accelerated by successive electrodes. A cyclotron is constructed such that charged particles in an evacuated vessel are caused to be accelerated while moving along a spiral path of increasing radius. Betatrons and synchrotrons accelerate charged particles by using electromagnetic induction.

A betatron gradually accelerates charged particles along a path in a hollow doughnut shaped evacuated vessel. In a synchrotron, an acceleration limit is increased by varying magnetic field while charged particles are being accelerated along a path in a circular disc shaped evacuated vessel.

The particle accelerating apparatus of this embodiment 11 is basically different from these prior art particle accelerating apparatus in that it utilizes an electromagnetic wave. Furthermore, the apparatus of this invention can accelerate particles not charged with electricity. The particle accelerating apparatus can be formed by utilizing the method of imparting speed or velocity to substance by the movement of the split progressive multilayer light shell BSNK'. The basic performances required for the particle accelerating apparatus are the capability of accelerating particles of various types, and the capability of accelerating various quantities. If these performances are fully satisfied, very excellent particle accelerating apparatus can be obtained.

As shown in embodiment 4, a split progressive multilayer spherical light shell BSNK' can entrap therein the plasma, and as shown in embodiment 8, it is possible to impart any desired speed to the entrapped plasma.

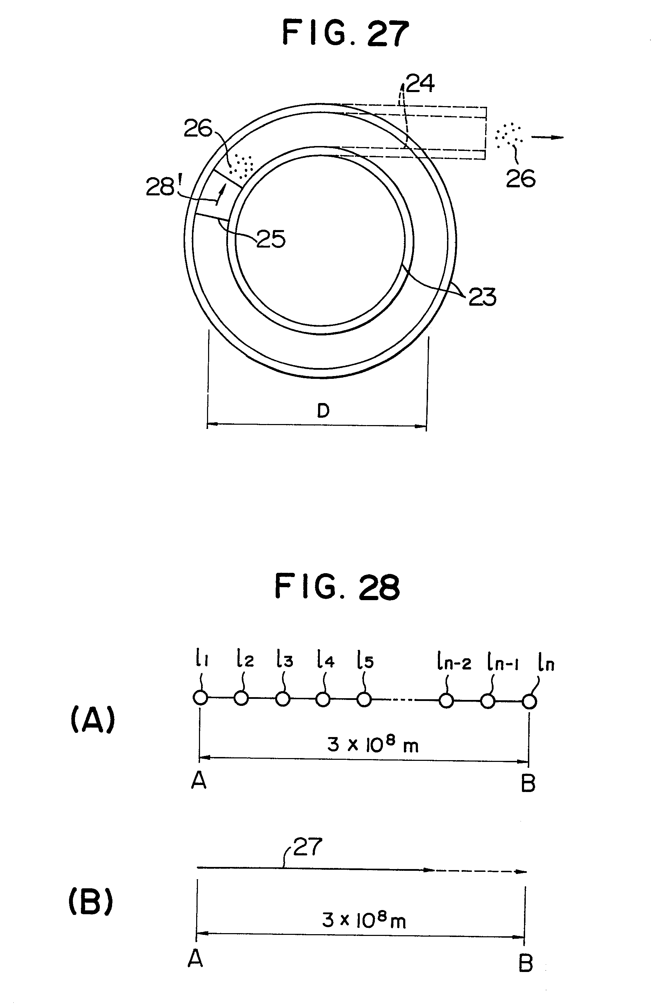

In particle accelerating apparatus shown in Fig. 27, the configuration of the split progressive multilayer light shell BSNK' is designed to be a hollow doughnut having a diameter D at the center of the path and to dispose a piston 25 made up of the split progressive multilayer light shell BSNK' in the hollow portion. After injecting a particle group 26 in the hollow portion of the doughnut, the piston 25 is rotated to push forwardly and successively accelerating the particle group 26.

After reaching a predetermined speed, when a portion of the hollow doughnut shaped ring 23 is deformed in a tangential direction, the particle group 26 can be derived out in a desired direction. To increase the speed or velocity of the particle group 26, it is necessary to increase the energy density of the electromagnetic wave as well as the progressing speed of the light shell so as to increase the force of the split progressive multilayer light shell BSNK' necessary for entrapping the particle group 26, and to increase the rotational speed of the piston 25 constituted by the light shell. The energy density of the electromagnetic wave can be increased by increasing the number and amplitude of vibrations.

In this case, it is necessary to cause the number of vibrations and amplitude to efficiently act upon the particle group 26.

The number of revolutions of piston will now be considered. The maximum speed in the nature is the light speed. In an artificial method, however, there is a case apparently showing a speed higher than the light speed. As shown in Fig. 28A, let us assume that n electric lamps $\ell_i$ (i = 1 - n) are disposed at an equal spacing over a straight distance of 300,000,000 meters, which is the distance in which a light flux 27 propagates in one second. When switches with preset times are sequentially operated, lamps $\ell_1$ - $\ell_n$ are sequentially flashed with an equal time interval. Since the switches are preset, the interval between flashings can be selected as desired. If n is made infinity, and the flashings of the lamps are viewed from a far side it will be seen that a single light point moves at a speed higher than the light speed. Fig. 28B shows a state in which the light flux 27 has left the starting point A but not yet reach an end point B $3 \times 10^8$ meters spaced from the starting point A. The signal of lamp $\ell_i$ which starts from the starting point A at the same time as the light flux 27 and proceeds toward the end point B in parallel with the light flux will be seen that it reaches the end point earlier than the light flux. Of course, this does not mean that an information issued by lamp $\ell_1$ reaches $\ell_n$ via $\ell_2$, $\ell_3$, .....

For the reason described above, it can be understood that when the split progressive multilayer light shell BSNK' which operates based on a predetermined information moves in a pulse form, it will be seen that the light shell moves at a speed faster than the light speed.

When the spacing between the distances of the movement of a pulse is made to be infinitely small, the spacing can be made to be less than a small fraction or less than the diameter of a particle, as a principle. Then it can be considered that the piston 25 constituted by a light shell acting upon the particle group 26 moves substantially continuously, so that it can be deemed that the piston 25 constituted by the light shell rotates at an ultrahigh speed. However, it is impossible to make zero the spacing between travelling distances. In addition, as it is impossible to make the speed of the particle group 26 to be higher than the light speed, it is impossible to push the particle group at a speed higher than the light speed. In the operation of the split progressive multilayer light shell BSNK, it is clear that the operating speed of a portion that requires feedback of an observed motion of the particle group 26 is lower than the light speed because of the necessity of transmission of an information to be fed back. However, where the pressure generated by the light shell is sufficiently larger than the variation of the internal pressure caused by the particle group 26, as it is possible to perform a predetermined operation, feedback can be omitted. As has been described hereinabove, as a principle, it is possible to accelerate the particle group 26 to a speed very close to the light speed by the rotation of piston 25 constituted by the split progressive multilayer light shell BSNK'. This shows that the particle accelerating apparatus according to this embodiment has the same or more excellent performance than the prior art particle accelerating apparatus.

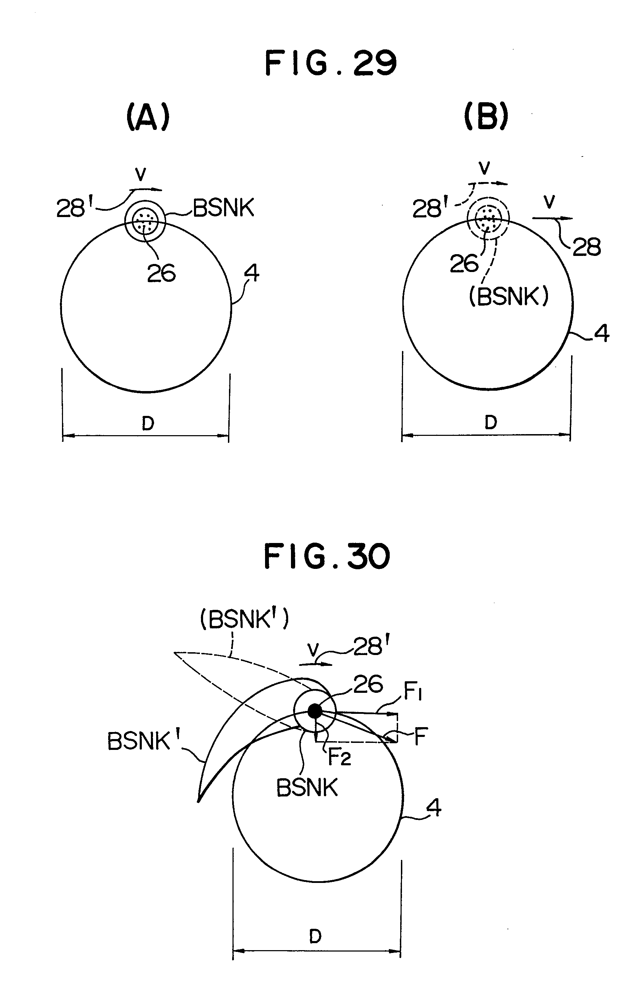

Fig. 29A shows a state wherein a split progressive multilayer spherical light shell BSNK entraps therein the particle group 26 and rotates along a circular orbit 4 of a diameter D. When the spherical light shell BSNK is extinguished momentarily the particle group 26 can be taken out in a tangential direction at a speed v. In this case, when the particle group 26 is compressed it would expand while flying, but when the initial speed is large, the percentage of expansion is small.

It is also possible to accelerate the particle group 26 by linearly moving the spherical light shell BSNK instead of rotating the same along circular orbit 4. In the same manner, when the spherical light shell BSNK is extinguished if its speed reaches a predetermined value v, accelerated particle group 26 can be taken out. Instead of using the spherical light shell BSNK, when aforementioned doughnut shaped hollow ring is developed into linear shape, an accelerated particle group 26 can also be taken out.

Fig. 30 shows a method of rotating a high density particle group 26 at an ultrahigh speed v along a circular orbit 4 having a diameter D. The force applied to the particle group 26 acts to compress and entrap the same and to rotate the group along the circular orbit 4. In Fig. 30, this force is generated by a combination of two split progressive multilayer spherical light shells BSNK and BSNK'.

The force contributing to the rotation of the particle group 26 comprises a force $F_2$ balancing with centrifugal force and a force $F_1$ for accelerating the particle group 26 in a tangential direction. The force acting upon the particle group is the resultant F of the forces $F_1$ and $F_2$. A crescent shaped light shell shown in Fig. 30 obtained by combining a split progressive multilayer spherical light shell BSNK and a split progressive multilayer light shell BSNK' corresponds to the force F and the force entrapping the particle group 26. The crescent shaped light shell has a configuration of a force applied in the direction of the centrifugal force for creating a pressure corresponding to force $F_2$. The light shell takes a form extending toward rear for corresponding to force $F_1$. Since force F which is

the resultant of forces $F_1$ and $F_2$ acts, when considered stationary, the applied split progressive multilayer light shell BSNK' would have a configuration as shown by dotted lines in Fig. 30. Actually, however, as has been discussed in connection with embodiments 1 through 8, the particle group 26 is also distributed at the central portion of the crescent shaped light shell obtained by combining the split progressive multilayer spherical light shell BSNK and the split progressive multilayer light shell BSNK', and the light shell as a whole (26, BSNK and BSNK') is revolving along the circular orbit 4 at the ultrahigh speed v. Consequently, due to the transmission speed of force in the light shell and the distribution of the particle group 26, the light shell does not extend linearly toward rear side as shown by dotted lines but continuously bends toward the center of the circular orbit 4 near the tail. Consequently, the entire configuration of the light shell becomes a crescent. After rotating the particle group 26 along the circular orbit 4 with the crescent shaped split progressive multilayer light shell (combination of the light shells BSNK and BSNK') for gradually accelerating the particle group 26, when the light shell is momentarily extinguished upon reaching a predetermined speed, the particle group 26 can be taken out in the tangential direction. In this case, when the particle group 26 has been compressed it will fly while expanding. But as has been pointed out before, when the speed v is high, the percentage of expansion would be decreased.

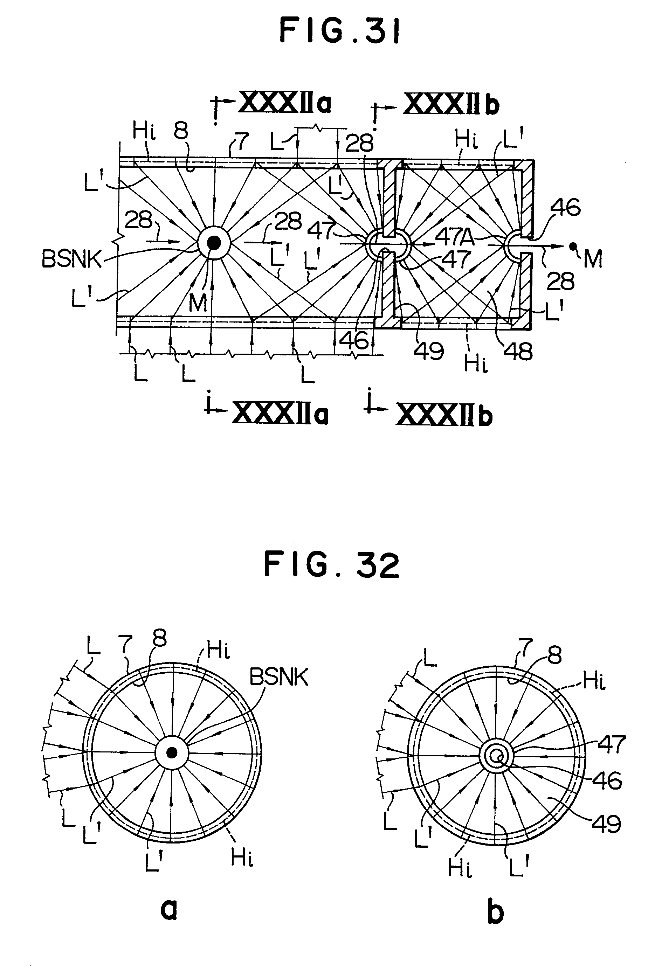

Fig. 31 illustrates a linear type particle accelerating apparatus. Fig. 31 shows a state in which a particle group M is entrapped in a light shell (for example, a split progressive multilayer spherical light shell BSNK) and the particle group M is linearly accelerated by simultaneously moving the light shell. The energy acting upon the particle group M is the diffractive light L' from nearby partial holograms Hi. Successive change of the partial holograms utilized in parallel with the movement of the particle group M to nearby partial holograms is possible by using a computer controlled variable hologram.

The accelerated particle group M passes as it is through a vacuum pump 47 made up of a light shell (light shells SNK and BSNK act as a pump) or only a portion of the light shell passing through the pump is extinguished. Thus the accelerated particle group can be taken out to the external space via a plenum chamber 48 of an evacuated vessel and through another vacuum pump 47A.

Fig. 32a shows the cross-section of Fig. 31 taken along a line XXXIIa-XXXIIa. This figure shows a state in which a light shell is formed by diffractive light L' from surrounding partial holograms Hi for entrapping and accelerating particle group M therein.

Fig. 32b shows a cross-section of Fig. 31 taken along a line XXXIIb-XXXIIb. Fig. 32b shows that an opening 46 of a partition wall 49 is partially closed by the vacuum pump 47 made up of a light shell and that air is evacuated to maintain the interior at a highly evacuated condition.

Particle accelerating apparatus having a circular orbit can be connected to the rear of the linear particle accelerating apparatus described above for performing an initial acceleration with the circular orbit.

By developing the theory of this particle accelerating apparatus, gravity wave generating apparatus can be obtained.

Although presence of the gravity wave has not been confirmed experimentally, its presence has been theoretically proven by Einstein's theorem of relativity and the conditions necessary to generate the same have been qualitatively proven. The truthness of the Einstein's theorem of relativity is now recognized by almost all of the physical engineers in the world as a result of hits of numerous astronomical predictions (confirmation by experiment or observation). Regarding the gravity wave reference is made to a text book entitled "The Search for Gravity Waves" by P.C.W. Davies, published by Cambridge University Press, 1980. Yet any gravity wave generating apparatus is not available only for the reason that a method for realizing apparatus capable of satisfying conditions revealed quantitatively according to the theorem has not been found. In the following, a method of preparing gravity wave generating apparatus acting as extremely powerful particle accelerating apparatus capable of effectively satisfying the conditions of generating the gravity wave will be described.

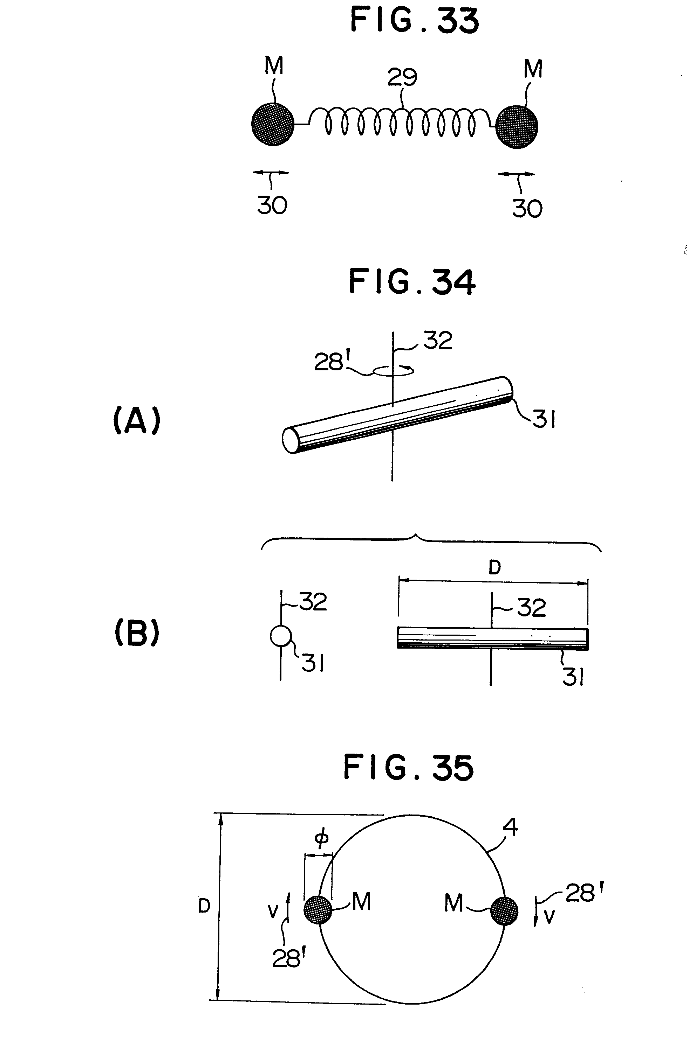

As a principle, generation of the gravity wave is very simple, that is requiring only variable mass quadruple poles. For example, a structure as shown in Fig. 33 is sufficient in which two equal masses M are interconnected with a spring 29. Furthermore, a rod 31 rotating about an axis 32 as shown by arrow 28' in Fig. 34A also constitutes a gravity wave generating apparatus. As shown in Fig. 34B, the projection of rod 31 expands and contracts while rotating between the front surface and the side surface of the rod 31 when viewed from the surface of rotation. This motion constitutes vibrating mass quadruple poles. However, there is a problem that the gravity wave generating apparatus utilizing this method can produce only a very small output.

For example, the output obtainable when an iron rod 31 of 100,000 tons is rotated once per second is $10^{-24}$J/sec. (J/sec. represents watts.) If one wishes to light a household lamp, a power of $10^{12}$ x $10^{12}$ times of the power described above is necessary. Consequently the technical value of these gravity wave generating apparatus is very small.

In summary, a large gravity wave effect can be provided only by a system moving at a speed close to the light speed ($v \approx c$) and having extremely small radius close to the gravity radius ($D \sim r_g$).

Fig. 35 shows a state in which 180° opposed two equal masses M are rotated in the same direction and at the same speed v along a circular orbit 4 having a diameter D. This motion creates vibrating mass quadruple poles. To efficiently generate gravity wave by utilizing this phenomenon, it is necessary to cause the speed v to approximate the light speed c and to make the diameter D of the circular orbit 4 close to the gravity radius $r_g$ (since the calculation is an approximate calculation of a large number of orders of magnitude, for the sake of brevity, it is assumed that diameter D $\approx$ radius $r_g$).

In the following, approximate calculations are shown.

The power output of the gravity wave shown in Fig. 35 can be approximately given by the following

well known equation.

$$(r_g/D)^2 \cdot (v/c)^6 \cdot c^5/G \qquad \ldots\ldots\ldots\ldots \quad (1)$$

The gravity radius $r_g$ is given by the following well known equation.

$$r_g = 2GM/c^2 \qquad \ldots\ldots\ldots\ldots\ldots\ldots\ldots \quad (2)$$

where G represents a gravity constant, and c light speed.

As an example, assume now that mass M = 500 Kg, its diameter c = $10^{-5}$ m, diameter D of the orbit = $10^{-4}$ m, speed v = 0.9c (c: light speed), and by substituting these values in equations (1) and (2) we obtain

$$\begin{aligned} r_g &= 2GM/c^2 \\ &\fallingdotseq 2 \times 6.67 \times 10^{-11} \times 500 \div (3 \times 10^8)^2 \\ &\fallingdotseq 7.4 \times 10^{-25} \text{m.} \end{aligned}$$

Hence

$$\begin{aligned} &(r_g/D)^2 \cdot (v/c)^6 \cdot c^5/G \\ &\fallingdotseq (7.4 \times 10^{-25}/10^{-4})^2 \\ &\quad \times (0.9/1)^6 \times (3 \times 10^8)^5 \div (6.67 \times 10^{-11}) \\ &\fallingdotseq 1.06 \times 10^{12} \text{ J/sec.} \end{aligned}$$

The power outputted by the gravity wave is about 1 x $10^{12}$ watts corresponding to about 1,300,000,000 horse powers.

Where the mass M has a diameter of $10^{-5}$ m and a weight of 500 Kg, its density is about 1/10 of the neutron density. Where such ultra high density mass M is made as a sphere having a diameter of $10^{-5}$ m (1/100 mm) and if it were possible to rotate the sphere at an ultra high speed **v** corresponding to 90% of the light velocity c it would be possible to obtain very efficient gravity wave generating apparatus. Above illustrated data is only one example and where the output is less than $1 \times 10^{12}$ watts, the conditions are alleviated. Of course it should be understood that higher output is possible as a principle.

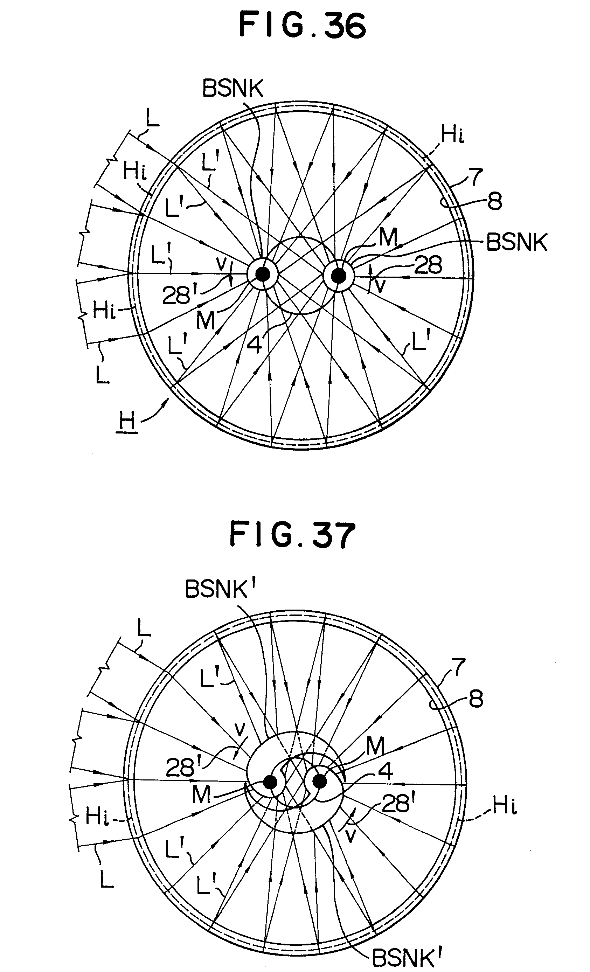

Fig. 36 diagrammatically shows that reproducing light L is irradiated upon a spherical hologram H made up of a plurality of partial holograms Hi to form a split progressive multilayer spherical light shell BSNK in evacuated vessels 7 and 8, and that two equal masses M are disposed on diametrically opposite positions and rotated in the same direction 28' at a speed v along a circular orbit 4 of a diameter D. The method of operating this apparatus is similar to that shown in Fig. 29. To render the mass M to have an ultra high density it is necessary to make large the power for entrapping a particle group 26 in the split progressive multilayer spherical light shell BSNK. Such purpose can be accomplished by increasing the amplitude and number of oscillations of the electromagnetic wave used as has been pointed out before.

Fig. 37 shows a state in which two diametrically opposed equal masses M are rotated at a speed v in the same direction 28' along a circular orbit 4 of a diameter D by the crescent shaped split progressive multilayer light shell BSNK' shown in Fig. 30. As shown in Fig. 30, the crescent shaped split progressive multilayer light shell BSNK' can compress the particle group 26 to an ultra high density and can rotate it along the circular orbit at the ultra high speed v.

Regarding the compression of the particles to an ultra high density, some examples were published in United States of America and Germany, in 1984. In the embodiment shown in Fig. 37, the degree of compression is 1/10 of that of these examples. Rotation along the circular orbit at the ultra high speed v is effected in the following manner. With conventional particle accelerating apparatus, electrons are accelerated to 99% of the light velocity even at 3,000,000 eVs. Where electrons are accelerated to higher speed, the mass of the particles would be increased according to the theorem of relativity. When electrons are accelerated to 300 MeVs, the mass would be increased by 600 times.

However, when particles having a large mass as protons are accelerated, even when the protons are accelerated to 300 MeVs, the increase in their masses is only about 30%. Because the mass of a proton is about 1800 times of an electron. To rotate particles at a speed near the light velocity ($v \approx c$), the apparatus should be designed by taking into consideration the fact that the mass might be increased.

By increasing the number of masses M rotating along the circular orbit 4, the number of oscillations of the discharged gravity wave can be increased.

However, when the wave becomes a continuous doughnut shape which is symmetry to the axis, the gravity wave would not be discharged.

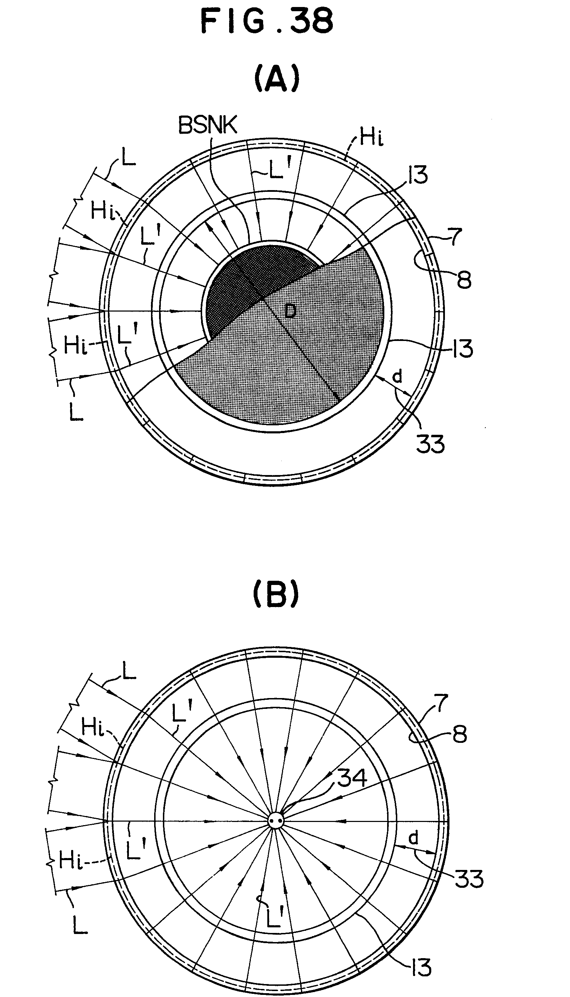

Fig. 38A is a diagrammatic representation showing gravity wave generating apparatus having a transparent (to diffractive light L') spherical inner evacuated vessel 13 having a diameter of D. For example, where D = 1.25 m its inner volume amounts to about 1 $m^3$. When filled with fluid of a specific gravity of unity, the mass of the fluid becomes about 1,000 Kg. Then the reproducing light L is applied to the fluid for compressing the same by the split progressive multilayer light shell BSNK'. When heated, the liquid converts into gas plasma. Since the split progressive multilayer light shell BSNK' also functions as a pump to entrap therein external substance, it is possible to completely entrap the substance remaining on the outside. As above described, whole substance is entrapped, compressed to a smaller size, and then divided thereby forming a pair of crescent shaped divided progressive multilayer light shells BSNK' as shown in Fig. 38B.

In Fig. 38B, when the mass is divided into two equal parts, the mass of each part equals to 500 Kg.

When the mass is compressed into a sphere of a diameter of $10^{-5}$ m, the density of the mass would become about 1/10 of the neutron density, thus satisfying the condition described above. This gravity wave generating device can also simultaneously effect the nuclear fusion reaction (see embodiment 9), thereby also acting as a nuclear fusion reactor. By passing a medium for taking out the nuclear fusion energy through a space 33 of a width d between the inner evacuated vessel 13 and the inner wall 8 of the outer evacuated vessel 7, the energy generated by the nuclear fusion reaction can be taken out. To this end, a method similar to embodiment 9 can be used.

All particle accelerating apparatus described above can be realized by utilizing embodiment 8. By utilizing embodiment 5, 6 or 7 such particle accelerating apparatus can also be provided.

Embodiment 12: <u>Method and apparatus for conveying a workpiece worked by the holography working machine utilizing holography</u>

The inner evacuated working chamber of a holography working machine has been described with reference to embodiment 10. To move material gas entrapped in the internal evacuated working chamber 22 to respective working portions, that is positions at which crystallization occurs, embodiment 8 is utilized. The split progressive multilayer light shell BSNK' according to embodiment 8 can entrap (take in) or take out the particle group 26. Accordingly, by the unique utilization of these performances, it is easy to convey the material gas to the position of crystallization.

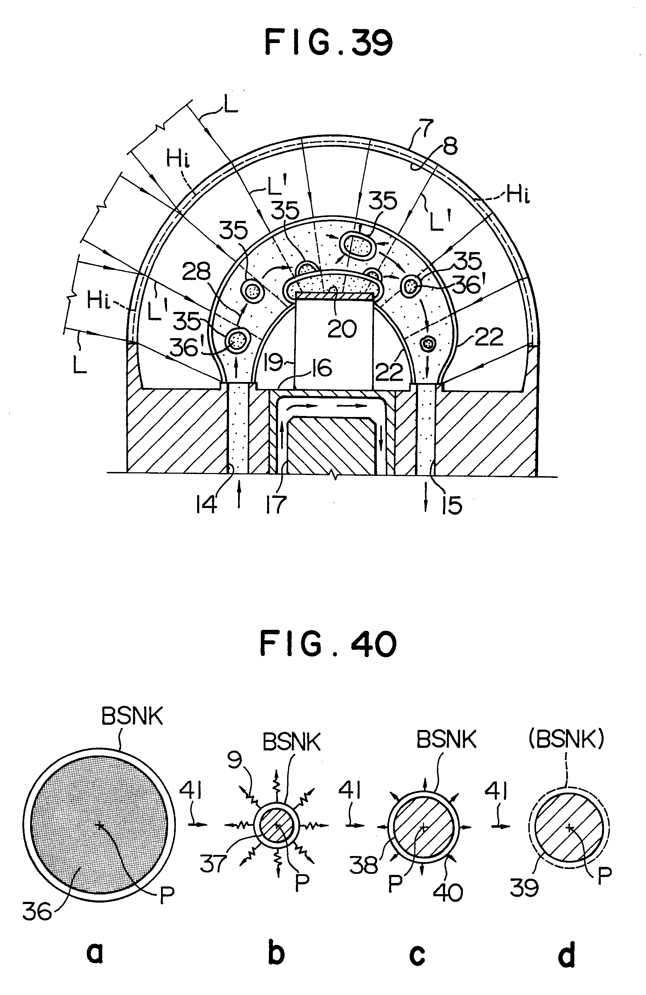

Fig. 39 is a sectional view of the holography working machine showing this state. A light shell 35 adapted to convey vaporized material 36' into the internal evacuated working chamber 22 can be realized by utilizing the method of embodiment 8. The light shell 35 can take in the vaporized material 36' and then convey it while changing the quantity and density thereof. As shown, the vaporized material 36' supplied through a supply nozzle 14 into the inner evacuated working chamber 22 is entrapped into the shell 35 and conveyed to a desired position as shown by arrows 28. Not used vaporized material 36' is entrapped in the light shell 35 to be conveyed to a recovery nozzle 15. Light shells 35 can be freely generated, extinguished, integrated or separated. Thus the method of this embodiment can improve the performance of the holography working machine.

The vaporized material conveying light shell 35 described above can be formed according to embodiment 8. The light shell can also be formed by utilizing embodiment 5, 6 or 7 but its performance is not so high as that formed by utilizing embodiment 8. Further the light shell can also be formed by utilizing two or more of the embodiments 5 through 8.

Embodiment 13: <u>A method and apparatus for effecting adiabatic expansion cooling of substance by utilizing holography technique</u>

Adiabatic expansion cooling of substance can be made by utilizing embodiment 4. The split progressive multilayer light shell BSNK' according to embodiment 4 can compress the substance to an ultra high density. To compress the substance to an ultra high density it is necessary to increase the entrapping force of the light shell. This is possible by increasing the number of oscillations and amplitude of the reproducing light used.

Figs. 40a - 40d show procedures of effecting the adiabatic expansion cooling of substance. Thus, Fig. 40a shows a state of entrapping substance in the split progressive multilayer spherical light shell BSNK, while Fig. 40b shows a state in which the entrapped substance is compressed to a high density by the light shell BSNK. The substance 37 compressed to the high density radiates electromagnetic wave 9 to the outside as its energy due to temperature rise. When the energy of the radiated electromagnetic wave 9 is adjusted to exceed the energy caused by the heating by the holography or newly added other energy, the high density substance loses its energy.

Then as shown in Fig. 40c, the spherical light shell BSNK is expanded for causing the high density substance 37 to expand rapidly while decreasing its pressure. Then the substance can be solidified by the cooling caused by adiabatic expansion. At the time of expansion, as it is possible to decrease the pressure applied by the spherical light shell BSNK, the heating by holography may be small.

If the expansion speed is too fast, care should be taken to prevent explosive scattering of the substance. Where the expansion speed is gradually decreased to zero at the final stage, the spherical shape can be maintained. As above described, it is possible to solidify such vaporized material 36 as metal by cooling in an extremely short time. This is also true for substances other than metal. Where a chemical reaction or a nuclear reaction accompanies, it is possible to execute adiabatic expansion by causing expansion after the energy generated by the reaction has been radiated as electromagnetic waves 9. Where the reaction continues to continuously generate energy, cooling is effected by a first stage expansion, and following the extinguishment of the reaction, the energy is dissipated by the radiation of the electromagnetic waves 9. After that, cooling is possible by a second stage adiabatic expansion. In fig. 40a - 40d, although the light shell was shown as a sphere, it will be clear that it can take any other configuration.

Above description concerns the cooling of substance by utilizing embodiment 4 without moving the center of gravity P of the substance but where the embodiment 8 is used cooling can be effected while moving the center of gravity of the substance.

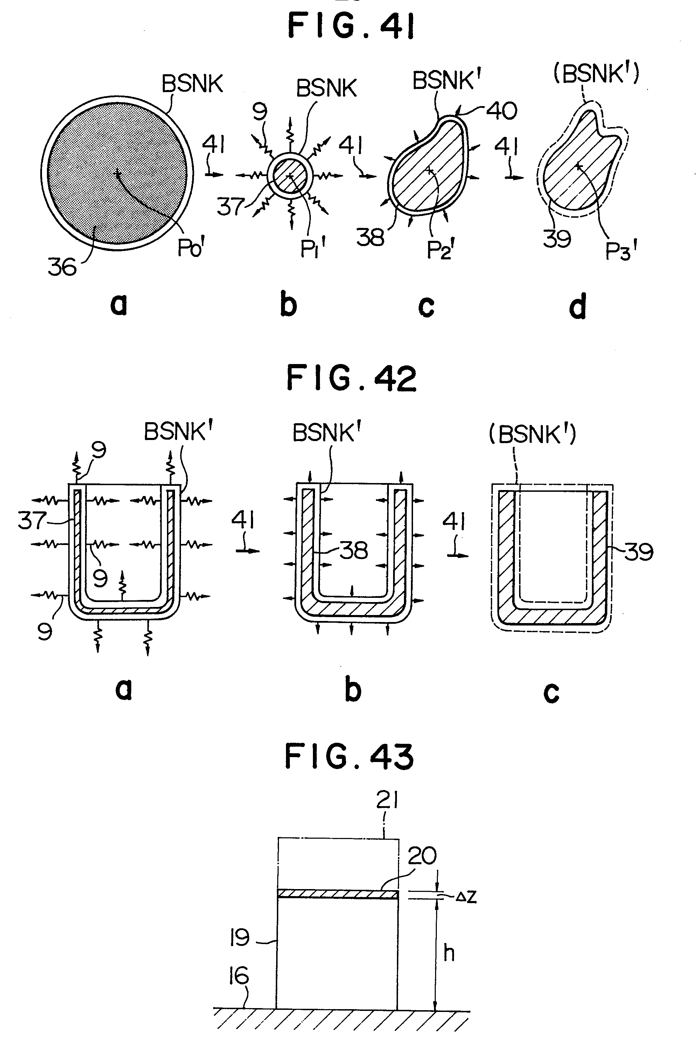

Figs. 41a - 41d show successive steps of cooling of substance by adiabatic expansion by utilizing embodiment 8 wherein the movement of the center of gravity $P_0$' - $P_3$' is free. More particularly, Fig. 41a shows a state in which a low density substance 36 is entrapped in a movable split progressive multilayer spherical light shell BSNK, while Fig. 41b shows a state in which the substance is compressed to a high density by the light shell BSNK and the energy is radiated as electromagnetic waves 9. Fig. 41c shows a state in which the light shell BSNK is deformed into a movable split progressive multilayer light shell BSNK' for effecting adiabatic expansion while deforming the substance, whereas Fig. 41d shows a state in which the substance is cooled to solidify as shown by reference character 39. In this case, since the method of embodiment 8 is utilized in Fig. 41a - 41d, the position of the center of gravities $P_0$' - $P_3$' can be changed as desired in a definite range.

The method of the adiabatic expansion cooling just described can be applied to the conversion of from gas to liquid, from gas to solid or from liquid to solid. This method is also applicable to the conversion of from gas to gas, from liquid to liquid or from solid to solid.

Above described method utilizing embodiment 4 can also be carried out by using embodiment 1, 2 or 3 although the efficiency decreases more or less. Above described method utilizing embodiment 8 can also be carried out by using embodiment 5, 6 or 7 although the efficiency also decreases slightly.

The methods described above can be used for cooling material in a holography working machine.

The basic principle of the holography working machine lies in that a high temperature space and a low temperature space are formed in a three dimensional space, and that a fact is utilized wherein the material in the low temperature space sublimates and then solidifies.

In Fig. 39, cooling was effected by the heat conduction from the cooling pedestal 16. In contrast, the method utilizing embodiment 13 may be considered a method in which a heating space is converted into a cooling space. The method shown in Figs. 40a - 40d and Figs. 41a - 41d can be considered to constitute a type of the holography working machine. Where a split progressive multilayer light shell BSNK' emanating strong electromagnetic wave is used, solid substance can be deformed to have any desired configuration. In Fig. 40a where solid substance is entrapped in the light shell instead of gas, the substance can be converted into the state shown in Fig. 40b by heating and compressing the substance with the energy of the reproducing light. Subsequent procedures are similar to those shown in Fig. 41a - 41d.

Some examples of the machining will be described as follows.

Figs. 42a - 42c show steps of manufacturing a cup shaped vessel 39. Fig. 42a show a state in which high density substance 37 compressed by a split progressive multilayer light shell BSNK' is radiating

electromagnetic waves 9. Fig. 42b shows a state in which the light shell BSNK' is expanded to cool the material 38 by the adiabatic expansion which expands the material in the direction of arrow 40. Fig. 42c shows a state in which the light shell is completely expanded so as to convert the substance into a solid body 39 and then the light shell BSNK' is extinguished. In a cup shaped body wherein the light shell BSNK' can be focused from outside the workpiece can be worked with a single step. However, in the case of a more complicated topological configuration, a method of laminating tomograms disclosed in the specification of the patent application regarding the holography working machine cited above can be relied upon.

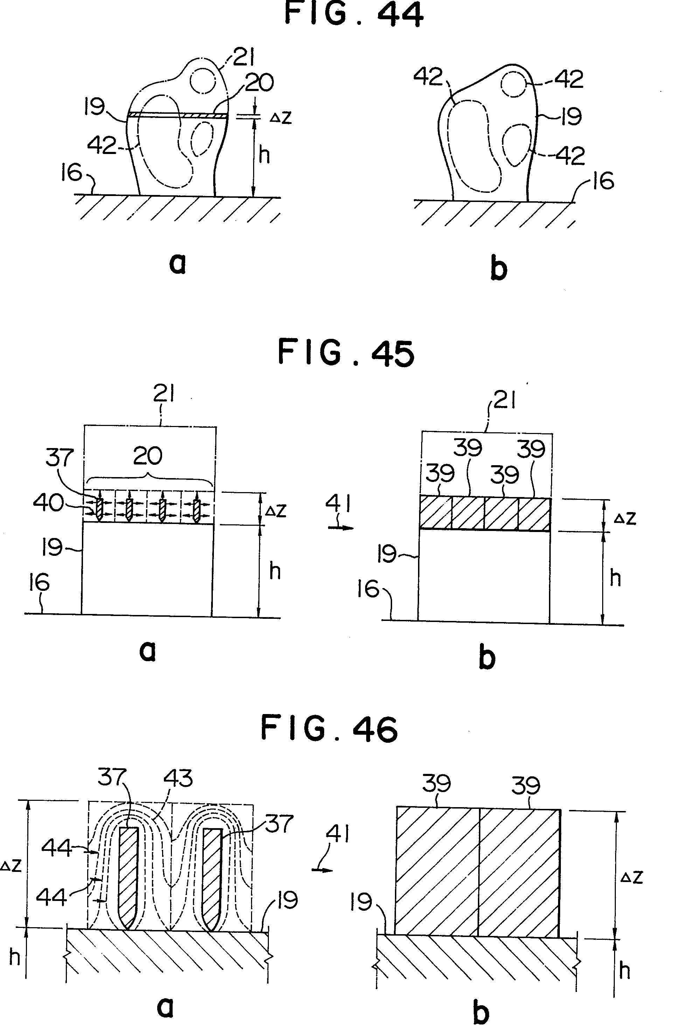

Fig. 43 diagrammatically shows the principle of the method of tomogram lamination. According to this method a product 19 is completed by continuously forming and laminating tomograms 20 of the material having a thickness $\Delta z$ and undergoing crystallization. Accordingly, where an image of a hologram is focused on the tomogram 20 undergoing crystallization, it is possible to manufacture the product 19. Hence it is possible to manufacture a hollow and complicated body as shown in Fig. 44a. Fig. 44b shows an external view of the completed body 19, in which dotted lines show internal cavities 42.

The tomogram lamination can be formed as follows by utilizing the adiabatic cooling method according to embodiment 13.

Figs. 45a and 45b show one example thereof. Fig. 45a shows a method of preparing solid body 39 by the steps of compressing raw material substance 37 to a high density by means of a split progressive multilayer light shell BSNK' thereby radiating electromagnetic waves 9, moving the high density substance to the position of the tomogram 20 undergoing crystallization, and expanding the light shell BSNK' at a predetermined position so as to expand the internal high density material 37, thereby cooling the same by adiabatic expansion to form the solid body 39. Fig. 45b shows a state in which the high density material 37 is solidified to make it integral with an already solidified portion 19.

Figs. 46a and 46b are partially enlarged views of the tomogram 20 shown in Fig. 45. After positioning material units 37 of high density at predetermined positions of the tomogram 20 by light shells, the material is caused to expand along equiexpansion lines 43 as shown in Fig. 46a. This is made for the purpose of preventing already solidified portions 19 from being deformed or melted by the high temperature and high pressure substance 37.

To accomplish this, the following three considerations are essential.

(1) At the time of connecting the high density material 37 to the already solidified portion 19, a control should be made such that solidified bodies 39 are formed by the cooling caused by adiabatic expansion. In other words, it is necessary to cause solidification concurrently with the connection so as to stably maintain the already solidified portion 19 without deformation and melting. (2) The equiexpansion lines 43 should be formed such that images focused by holography can be made satisfactory. (3) The equiexpansion lines 43 or the direction of application of pressure 44 should be parallel as far as possible with the already solidified portions 19 as shown in Fig. 46a so that the light shell BSNK would not apply pressure to the already solidified portions. This is possible by raising the equiexpansion lines 43 while sequentially solidifying the material 37 at portions near already solidified portions 19. In this manner, as shown in Fig. 46b, by forming solid substances 39 it is possible to connect and integrate tomograms 20 having a thickness $\Delta z$ to already solidified portion 19.

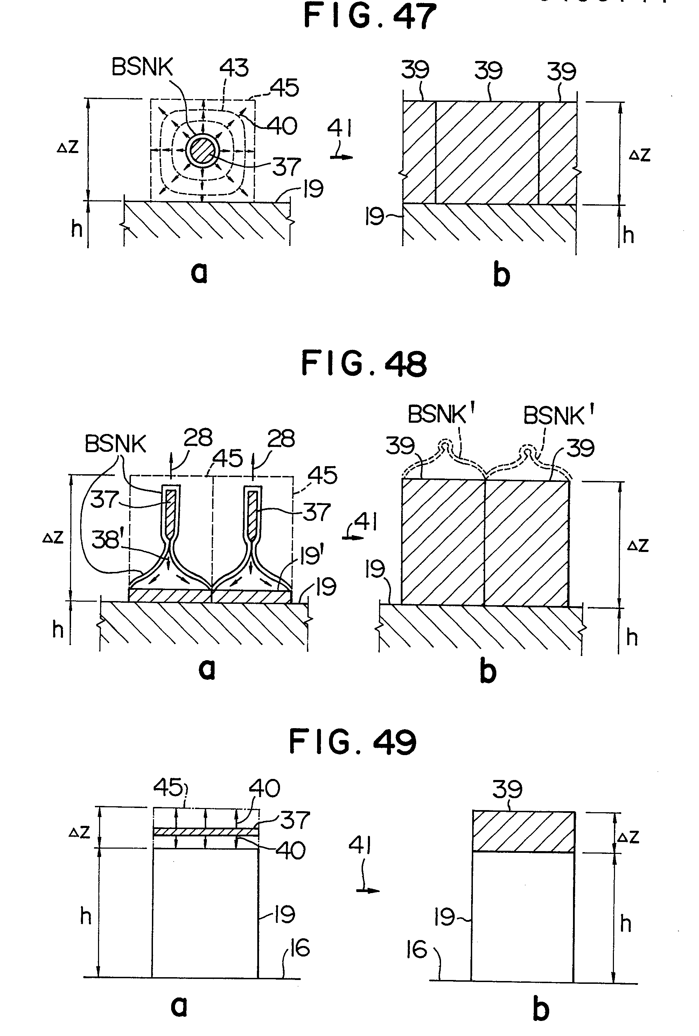

Figs. 47a and 47b show a method efficient to a case wherein the thickness $\Delta z$ is extremely small and high working accuracies are not necessary. High density material formed by the split progressive multilayer light shell BSNK' at the center of the space 45 expected to be solidified is rapidly expanded adiabatically while controlling speed by the light shell BSNK'.

At the final stage of expansion, adjacent units 45 are pressed together or pressed against already solidified portion 19 to form an integral body. At this time for the purpose of preventing deformation of the configurations of the units 45 and the already solidified portion 19, the equiexpansion line 43, the expansion speed toward the direction of arrow 40 and the density and temperature of the high density material 37 are controlled.

Figs. 48a and 48b show a method of growing crystals by taking out, part after part, the high density material 37 entrapped in a split progressive multilayer light shell BSNK' and then causing the material 37 to undergo adiabatic expansion. According to this method extremely precise working is possible. In a first case, as shown by an arrow 38', the high density material 37 is derived out as low density gas, while in a second case, the material 37 is derived out in a state having a density close to a solid body. In the first case, the speed of manufacturing is low, and the method corresponds to the method shown in Fig. 39 according to embodiment 12 which is carried out in more miniaturized scale. In the second case, while deriving out the material 37 in a direction of arrow 38', the material is solidified as at 19' when the density of the gas decreases to that of a solid body.

Where the temperature and pressure are not so high, the following method is possible. Figs. 49a and 49b show a case wherein a tomogram 39 (previously designated by 20) is expanded adiabatically at a time. This is possible because the temperature and pressure are not too high so that already solidified portion 19 would not be deformed. Fig. 49a shows a state wherein the high density material 37 is formed at a position of a thickness $\Delta z$ to cause the material to expand adiabatically in a direction of 40. Fig. 49b shows a state in which solidified material 39 has been integrated with previously solidified portion.

As above described, this embodiment renders the holography working machine to be much higher dimensional machine, so that such machine is termed an "adiabatic expansion holography working machine".

The method of holography working machine utilizing adiabatic expansion cooling described above can be realized by using the embodiment 4 or 8. This method can also be practiced by using the embodiment 1, 2 or 3 although the efficiency is lower than that utilizing embodiment 4. It is also possible to utilize embodiment 5, 6 or 7 although the efficiency decreases than a case utilizing embodiment 8.

According to this invention it is possible to realize a nuclear fusion reactor of high utility which cannot be realized according to the prior art method, a nuclear fission reactor, an inside evacuated working chamber 22 of a holography working machine, a method of conveying material gas 36' to a working portion in the working chamber, particle accelerating apparatus which is important to high energy physics, gravity wave generating apparatus which is an application of the particle accelerating apparatus, adiabatic expansion cooling apparatus, an adiabatic expansion holography working machine and other various useful industrial apparatus.

Thus by utilizing the invention, problems of energy and natural resources, and problems of freedom and versatility of the designs of products can be solved.

WHAT IS CLAIMED IS:

1. A method of imparting energy to substance by utilizing holography technique, comprising the steps of:

forming a light shell by utilizing real images produced by holography technique, and

subjecting said substance entrapped in said light shell to explosive compression, thus imparting energy to said substance.

2. The method according to claim 1 wherein said light shell is spherical.

3. The method according to claim 1 wherein said light shell comprises a single light shell.

4. The method according to claim 1 wherein said light shell comprises a multilayer light shell.

5. A method of imparting energy to substance by utilizing holography technique comprising the steps of:

forming a multilayer light shell entrapping said substance by utilizing real images produced by holography technique , and

applying pressure to said substance in one direction by said multilayer light shell.

6. The method according to claim 1 wherein a size of said light shell is reduced toward inside so as to increase density of said substance entrapped in said light shell.

7. The method according to claim 5 wherein said multilayer light shell is advanced in one direction for moving said substance.

8. The method according to claim 1 wherein said light shell is expanded toward outside so as to decrease density of said substance entrapped in said light shell.

9. The method according to claim 1 which further comprises the step of sequentially advancing said light shell toward inside over a predetermined distance so as to repeatedly entrap in said light shell said substance which has flown out of said light shell thereby enhancing entrapping effect of said light shell.

10. The method according to claim 4 which further comprises the step of periodically advancing said multilayer light shell in one direction over a predetermined distance so as to repeatedly applying pressure to said substance.

11. The method according to claim 1 which further comprises the step of repeatedly advancing said light shell toward outside over a predetermined distance so as to repeatedly taking out said substance entrapped in said light shell thereby decreasing entrapping effect.

12. The method according to claim 7 which further comprises the step of periodically moving backwardly said multilayer light shell in the other direction over a predetermined distance for repeatedly applying backward pressure to said substance entrapped in said multilayer light shell thereby reducing pressure of said substance.

13. A method of imparting energy to substance comprising the steps of:

forming split partial light shells by utilizing real images produced by holography technique, and

independently advancing respective split partial light shells so as to vary pressure distribution caused by said split partial light shells.

14. The method according to claim 4 which further comprises the steps of dividing said multilayer light shell into split partial multilayer light shells and independently advancing respective split partial multilayer light shells for varying pressure distribution applied thereby.

15. The method according to claim 13 wherein some of said split partial light shells are progressed rearwardly.

16. The method according to claim 15 wherein some of said split partial light shells are progressed backwardly so as to make negative pressure at said some split partial light shells for taking out said substance therefrom.

17. The method according to claim 1 wherein a center of said light shell is moved.

18. The method according to claim 1 wherein positions of spaces on the inside and outside of said light shell are exchanged for reversing the action of said light shell upon said substance.

19. The method according to claim 1 wherein energy quantity in said light shell is maldistributed for varying pressure applied to said substance by said light shell.

20. The method according to claim 1 which further comprises the steps of locating a hologram about a space in which said light shell is focused and utilizing a light shell produced by applying reproducing light to a hologram.

21. The method according to claim 20 wherein said hologram comprises two or more partial holograms.

22. The method according to claim 20 wherein focused images are obtained by applying at least one reproducing light to a single hologram.

23. The method according to claim 21 wherein focused images produced by applying reproducing light to each of said partial holograms are used to form said light shell.

24. The method according to claim 20 wherein a plurality of holograms are disposed to form a sphere.

25. The method according to claim 20 wherein said holograms are disposed to form a cylinder.

26. The method according to claim 20 wherein said holograms are disposed in the form of a hollow ring.

27. A method of imparting energy to nuclear fuel substance by utilizing holography technique comprising the steps of:

forming a light shell by utilizing real images produced by holography,

entrapping nuclear fuel substance in said light shell,

heating said nuclear fuel substance to an ultra high temperature with energy of said light shell to create a nuclear reaction, and

taking out energy generated by said nuclear reaction to the outside of said shell.

28. The method according to claim 27 wherein said nuclear fuel substance comprises a relatively light element, thereby causing a nuclear fusion reaction.

29. The method according to claim 27 wherein said nuclear fuel substance comprises a relatively heavy element, thereby causing a nuclear fission reaction.

30. A method of accelerating particles by using holography technique comprising the steps of:

preparing a hollow doughnut shaped orbit;

preparing a hollow progressive multilayer spherical light shell by utilizing real images of holograms, said light shell containing said particles and imparting energy thereto;

rotating said light shell along said orbit like a piston;

quickly extinguishing said light shell to release said particles; and

concurrently opening said orbit in a tangential direction for causing said released particles to advance in said tangential direction.

31. The method according to claim 30 wherein said progressive spherical light shell is combined with a split progressive light shell to form a crescent shaped light shell.

32. A method of linearly accelerating particles of substance by utilizing holography technique comprising the steps of:

preparing a cylindrical vessel,

forming a light shell in said cylindrical vessel for entrapping said particles to impart energy thereto,

sequentially forming a plurality of computer controlled partial holograms near an inner surface of said cylindrical vessel so as to accelerate said light shell in a longitudinal direction of said cylindrical vessel,

forming a plurality of light shells acting as vacuum pumps and arranged in the longitudinal direction of said cylindrical vessel, and

extinguishing one of said light shells acting as vacuum pumps located at an exit end of said cylindrical vessel for taking out to the outside thereof accelerated particles.

33. A method of generating a gravity wave by utilizing holography technique comprising the steps of:

providing an evacuated vessel,

forming a spherical hologram constituted by a plurality of partial holograms in said evacuated vessel,

forming a pair of diametrically opposed split progressive multilayer spherical light shells by irradiating partial holograms with reproducing light,

said split progressive multiplayer spherical light shells entrapping particle groups of equal mass, and

rotating said split progressive multilayer spherical light shells at an equal speed about a center of said evacuated vessel.

34. The method according to claim 33 wherein each of said split progressive multilayer spherical light shells has a crescent shape.

35. A method of generating a gravity wave by utilizing holography technique comprising the steps of:

providing an evacuated vessel filled with fluid,

forming a spherical hologram constituted by a plurality of partial holograms in said evacuated vessel,

forming a split progressive multilayer light shell in said evacuated vessel by passing reproducing light through said spherical hologram so as to entrap said fluid in said split progressive multilayer light shell,

causing said split progressive multilayer spherical light shell to compress said fluid entrapped therein and to act as a pump to take therein said fluid on the outside thereof, and

reducing diameter of said split progressive multilayer spherical light shell to finally form a pair of crescent shaped split progressive multilayer light shells.

36. The method of generating a gravity wave according to claim 35 wherein said evacuated vessel has a double wall construction and said method further comprises the steps of creating a nuclear fusion reaction in said pair of crescent shaped split progressive multilayer light shells, and passing heat absorbing medium through said double wall evacuated vessel to take out energy created by said nuclear fusion reaction.

37. A method of conveying working material to a working position of a holography working machine comprising the steps of:

defining an evacuated working chamber,

disposing a plurality of split holograms about said working chamber,

supplying vaporized working material into said working chamber,

forming light shells in said evacuated working chamber by irradiating said split holograms with reproducing light thereby entrapping said vaporized working material in said light shells,

successively moving said light shells to said working position,

extinguishing said light shells at said working position thereby supplying said vaporized working material to a workpiece worked by said working machine, and

discharging not used vaporized working material to the outside of said working chamber.

38. A method of cooling a substance by an adiabatic expansion by utilzing holography technique comprising the steps of:

entrapping said substance in a split progressive multilayer spherical light shell for compressing said substance to a high density whereby temperature of said compressed substance increases and energy of the substance is radiated to the outside of said light shell as electromagnetic waves,

expanding said light shell for effecting adiabatic expansion of said high density substance causing the same to cool and solidify, and

extinguishing said light shell after solidification of said substance.

39. The method according to claim 38 wherein a center of gravity of said light shell is moved and a contour of said light shell is changed to obtain a solid article having a desired configuration.

40. A method of forming a solid body by using tomography comprising the steps of:

entrapping particles of substance in a split progressive multilayer optical shell to compress said substance to have a high density,

radiating energy of said high density substance to the outside of said light shell as electromagnetic waves,

moving said shell to a position of solid layer undergoing crystallization, and

causing said light shell to undergo adiabatic expansion at said position so as to solidify said particles and to integrate solidified particles with said solid layer.

41. A method of forming a solid article by using holography technique comprising the steps of:

entrapping particles of substance in a split progressive multilayer light shell for heating and compressing said substance to have a high density, and

successively taking out said high density substance to the outside of said light shell to cause said taken out substance to undergo adiabatic expansion thereby forming crystals of said substance.

42. Apparatus for imparting energy to substance by utilizing holography technique comprising:

an evacuated vessel containing particles of said substance,

a plurality of partial holograms arranged in said evacuated vessel to form a sphere, and

means for irradiating said partial holograms with reproducing light to form a plurality of real images of said partial holograms,

said plurality of real images constituting a closed spherical light shell entrapping therein said substance and imparting thereto energy by explosive compression.

43. The apparatus according to claim 42 which further comprises means for sequentially reducing size of said spherical light shell, thus forming a progressive spherical light shell which increases temperature and density of said substance entrapped in said light shell.

44. The apparatus according to claim 42 which further comprises at least one closed spherical light shell which constitutes a multilayer spherical light shell together with said first mentioned spherical light shell.

45. The apparatus according to claim 42 wherein an orientation angle of said reproducing light is varied to form independent focused images of said partial holograms.

46. The apparatus according to claim 42 wherein said holograms are varied electronically or mechanically.

47. The apparatus according to claim 42 wherein wavelength of said reproducing light is varied to vary magnifying power of said real images.

48. The apparatus according to claim 42 wherein said evacuated vessel is integral with said holograms.

49. Apparatus for effecting nuclear reaction of nuclear fuel substance by using holography technique comprising:

an evacuated vessel containing said nuclear fuel substance,

a plurality of partial holograms associated with said evacuated vessel to form a sphere,

means for irradiating said partial holograms with reproducing light to form a plurality of real images of said partial holograms,

said plurality of real images constituting a spherical light shell entrapping therein said nuclear fuel substance and imparting thereto energy by explosive compression,

means for reducing a diameter of said spherical light shell for heating and compressing said nuclear fuel substance to a temperature necessary to effect nuclear reaction which creates electromagnetic waves propagating toward said evacuated vessel, and

means for passing medium in contact with said evacuated vessel for absorbing energy of said electromagnetic waves.

50. The apparatus according to claim 49 wherein said nuclear fuel substance comprises a relatively heavy element, thereby causing a nuclear fission reaction.

51. The apparatus according to claim 49 wherein said nuclear fuel substance comprises a relatively light element, thereby causing a nuclear fusion reaction.

52. The apparatus according to claim 49 wherein said evacuated vessel has double wall construction in which a pair of radially spaced concentric walls are disposed and said medium is passed through a space between said radially spaced walls.

53. The apparatus according to claim 52 wherein said medium comprises gas, liquid or mixture thereof.

54. The apparatus according to claim 49 wherein said partial holograms are installed in said evacuated vessel and radially spaced therefrom.

55. The apparatus according to claim 54 wherein said plurality of partial holograms are spaced circumferentially.

56. The apparatus according to claim 49 wherein said partial holograms form a closed sphere.

57. The apparatus according to claim 49 which further comprises means for irradiating said partial holograms with reproducing light having different orientation angle from said first mentioned reproducing light for forming another closed spherical light shell inside of said first mentioned closed spherical light shell.

58. A holography working machine comprising:

an evacuated working chamber,

means installed in said chamber for supporting a product to be manufactured,

at least one partial hologram for defining said working chamber,

means for supplying vaporized material into said working chamber, and

means for recovering not used vaporized material remaining in said working chamber.

59. The machine according to claim 58 wherein said supporting means is provided with a passage for passing cooling medium.

60. The machine according to claim 58 which further comprises an inner evacuated working chamber contained in said working chamber, said inner evacuated chamber being defined by split progressive multilayer light shells obtained by assembling diffration light passing through respective partial holograms.

61. Apparatus for accelerating particles by utilizing holography technique comprising:

a hollow doughnut shaped orbit,

a hollow progressive multilayer spherical light shell formed by utilizing real images of holograms and containing therein said particles,

said particles being imparted with energy by said light shell,

means for rotating said light shell along said orbit like a piston, and

means for quickly extinguishing said light shell to release said particles and concurrently opening said orbit in a tangential direction for causing said released particles to advance in said tangential direction.

62. The apparatus according to claim 61 wherein said progressive multilayer spherical light shell is combined with a split progressive light shell to form a crescent shaped light shell.

63. Apparatus for linearly accelerating particles of substance by utilizing holography technique comprising:

a cylindrical vessel,

a light shell formed in said cylindrical vessel for entrapping said particles therein,

a plurality of computer controlled partial holograms located near an inner surface of said cylindrical vessel and formed sequentially so as to accelerate said light shell in a longitudinal direction of said cylindrical vessel,

diffraction light from said partial holograms forming said light shell for imparting energy to the particles entrapped in said light shell,

a plurality of vacuum pumps respectively constituted by light shells which are formed in the same manner as the firstly mentioned light shell and arranged in the longitudinal direction of said cylindrical vessel, and

means for extinguishing one of said vacuum pumps at an exit end of said cylindrical vessel for taking out to the outside thereof accelerated particles.

64. The apparatus according to claim 63 which further comprises partition walls provided in said cylindrical vessel in transverse directions thereof, each partition wall having a central opening at which said vacuum pump is formed.

65. Gravity wave generating apparatus utilizing holography technique comprising:

an evacuated vessel,

a spherical hologram constituted by a plurality of partial holograms contained in said evacuated vessel, and

a pair of diametrically opposing split progressive multilayer spherical light shells formed in said evacuated vessel by irradiating said partial holograms with reproducing light,

said split progressive multilayer spherical light shells entrapping particle groups of equal mass and rotating at equal speed about a center of said evacuated vessel.

66. The gravity wave generating apparatus according to claim 65 wherein a force of entrapping said particle groups in respective split progressive multilayer spherical light shells is controlled by varying an amplitude and frequency of electromagnetic wave.

67. The gravity wave generating apparatus according to claim 65 wherein each of said split progressive multilayer spherical light shells has a screscent shape.

68. A gravity wave generating apparatus utilizing holography technique comprising:

an evacuated vessel filled with fluid,

a spherical hologram constituted by a plurality of partial holograms contained in said evacuated vessel, and

a split progressive multilayer spherical light shell formed in said evacuated vessel by reproducing light passing through said spherical hologram and entrapping therein said fluid,

said split progressive multilayer spherical light shell compressing said fluid and also acting as a pump to take therein said fluid on the outside thereof, and

said split progressive multilayer spherical light shell reducing its diameter to finally form a pair of crescent shaped split progressive multilayer light shells.

69. The gravity wave generating apparatus according to claim 68 wherein said evacuated vessel has a double wall construction, said pair of crescent shaped split progressive multilayer light shells creating a nuclear fusion reaction therein, and heat absorbing medium is passed through said double wall evacuated vessel to take out heat energy created by said nuclear fusion reaction.

70. Apparatus for conveying working material to a working position of a holography working machine comprising:

means for defining an evacuated working chamber,

a plurality of split holograms disposed to surround said working chamber,

means for supplying vaporized working material into said working chamber,

means for forming light shells in said evacuated working chamber by irradiating said split holograms with reproducing light so as to entrap said vaporized working material in said light shells,

means for successively moving said light shells to said working position,

means for extinguishing said light shells at said working position thereby supplying said vaporized working material to a workpiece worked by said working machine, and

means for discharging not used vaporized working material to the outside of said working chamber.

FIG. 1

Hi
L
L'
L'
7
8
IK
Hi
Δd
L'
L
Hi
L'
Hi

FIG. 2

I
2
Δd
IK'

FIG. 3

La
θ
La'(Lb')
L'b
Hi
5
θ
fa
fb
Lb
r2
r1

FIG. 4

L
L'
NK
Hi
f1
fn
fn-1
f3
f2
r

FIG. 5

Kn
Kn-1
Kn-2
K2
K1
oV1
r
1V2
1d2
2
2
1'
1
1'
2
2
2
nVn+1
n-1Vn
n-2Vn-1

FIG. 6

Kn-1
Kn
Kn-2
K4
K3
K2
K1
1
2
1'
2
1'
1'
2
2
1'
2
2
nVn+1
n-1Vn
n-2Vn-1
3V4
2V3
1V2
oV1

FIG. 7

La
L'
NKa
NKb
r1
θ
Nka
5
Nkb
Hi
afn
bf1
bf2
θ
af1
r2
bfn-1
afn-1
af2
bfn
L'
Lb

FIG. 8

La
L'
SNka
fn+1
θ
fo
5
5
Hi
fn
f1
θ
f2
fn-1
SNka
f3
L'
Lb
r

FIG. 9

SNka
5
5
5
5
5
5
5
fn+1
fn
fn-1
f3
f2
f1
fo
SNkb

FIG. 10

Lc
L'
cfn+1
BSNkc
cf1
cfo
Hi
5
L'
Q1
5
Q2
Hi
dfo
dfn+1
BSNkd
Ld
L'

0186711

FIG. 11

BSNkc
cfn+1
cfn
cfn-1
cfn-2
cf3
cf2
cf1
cfo
U1
5
Q1
nVn+1
oV1
U2
Q2
dfn+1
dfn
dfn-1
dfn-2
df3
df2
df1
dfo
BSNkd

FIG. 12

L
L'
IK'
Hi
7
8
P1(x1, y1, z1)
3
(IK')
P2(x2, y2, z2)

# FIG. 13

IK'
1
2
P(x, y, z)
3
Δd1
Δd2

# FIG. 14

P2(x2, y2, z2)
L1
L'2
k2
IK2
θ
Hi
3
θ
IK1
k1
L2
L'1
P1(x1, y1, z1)

8/23

FIG. 15

r2
r3
IK1
IK2
IK3
IK4
Po'
P1'
P2'
3
3
r1
r4
d1
d2

FIG. 16

NK1
(NK2)
3
P1(x1, y1, z1)
P2(x2, y2, z2)

9/23

# FIG. 17

(NK²)
P2(x2, y2, z2)
P2
L1
L'2
Nk2
θ
Hi
3
θ
L2
L'1
Nk1
(NK¹)
P1(x1, y1, z1)

# FIG. 18

SNK¹
SKn-1
SKn
SK²
SK¹
SK⁰
SKn+1
(SNK²)
5
5
5
3
P1(x1, y1, z1)
P2(x2, y2, z2)

10/23

FIG.19

(A)
La
α
α
Lb
X
X
Hi
Z
Z
(B)
La
β
β
Lc
Y
Y
Hi
Z
Z

FIG.20

La
L'a
L'a
Hi
La
Lb
L'b
Lb
Hi
L'b
Lb
IKb
IKa
L'a
Hi
5
6
7
8

FIG.21

Hi
6b
10
Hi
7
10
6a
Hi
10
10
10
8
10
9
9
9
9

FIG.22

Hi
10
6b
10
Hi
7
10
6a
10
10
11
10
8
11
9
9
9
9

12/23

FIG. 23

L
7
8
Hi
Hi
12
L'
6
IK
L'
L

FIG. 24

Lb
7
L'b
8
Hi
IKa
12'
5
Lb
L'b
IKb
13
La
L'a
Hi
Hi
6
La

FIG. 25

L
Hi
Hi
14
14
7
8
L'
21
6
L
L'
ΔZ
Hi
L'
20
19
h
L
16
15
18
15
17

FIG. 26

L
Hi
7
8
Hi
L'
22
L'
L'
21
ΔZ
Hi
22
L'
L'
20
L
19
h
18'
14
17
15

14/23

FIG. 27

24
26
26
28'
25
23
D

FIG. 28

(A)
l1
l2
l3
l4
l5
ln-2
ln-1
ln
3 x 10^8 m
A
B

(B)
27
3 x 10^8 m
A
B

FIG. 29

(A)
(B)
V
28'
BSNK
26
4
D
V
28'
V
28
26
(BSNK)
4
D

FIG. 30

(BSNK')
V
28'
26
F1
F
F2
BSNK'
BSNK
4
D

FIG.31

XXXIIa
XXXIIb
Hi
8
7
L
28
L'
28
BSNK
M
47
47A
46
M
28
49
48
46
L
XXXIIa
XXXIIb

FIG.32

L
7
8
Hi
BSNK
L'
a
47
46
49
b

FIG. 33

M
29
M
30
30

FIG. 34

(A)
32
28'
31
(B)
D
32
31
32
31

FIG. 35

4
ϕ
D
V
M
M
28'
V
28'

FIG. 36

BSNK
L
Hi
L'
L'
7
8
M
BSNK
L'
v
28
28'
v
Hi
M
4
L'
L'
L
H

FIG. 37

BSNK'
L
L'
7
8
v
M
28'
4
M
28'
Hi
Hi
v
L'
L'
L
BSNK'

FIG.38

(A)

BSNK
Hi
L
L'
13
Hi
L'
7
8
D
Hi
L'
13
d
L
33

(B)

L
L'
7
Hi
8
34
L'
d
Hi
33
L'
L
13

FIG.39

L
Hi
L'
35
35
35
7
8
Hi
L'
35
36'
28
Hi
L'
35
36'
20
22
L
19
16
22
14
17
15

FIG.40

BSNK
36
P
a
41
9
BSNK
37
P
b
41
BSNK
38
P
40
c
41
(BSNK)
39
P
d

0186711

FIG. 41

BSNK
BSNK
BSNK'
(BSNK')
9
40
41
41
41
37
38
39
36
Po'
P1'
P2'
P3'
a
b
c
d

FIG. 42

BSNK'
BSNK'
(BSNK')
9
37
9
9
41
38
41
39
a
b
c

FIG. 43

21
20
ΔZ
19
h
16

0186711

FIG. 44

21
20
19
ΔZ
42
h
16

a

42
42
19
42
16

b

FIG. 45

21
37
20
40
ΔZ
19
h
16
41
21
39
39
39
39
39
ΔZ
19
h
16

a b

FIG. 46

37
43
37
44
44
ΔZ
19
h
41
39
39
19
ΔZ
h

a b

0186711

FIG. 47

BSNK
43
45
40
41
37
19
ΔZ
h
39
39
39
ΔZ
19
h
a
b

FIG. 48

BSNK
28
28
45
45
37
37
38'
19'
19
41
ΔZ
h
BSNK'
BSNK'
39
39
19
ΔZ
h
a
b

FIG. 49

45
40
37
40
ΔZ
h
19
16
41
39
ΔZ
19
h
16
a
b

# INTERNATIONAL SEARCH REPORT

0186711

International Application No. PCT/JP85/00338

**I. CLASSIFICATION OF SUBJECT MATTER** (if several classification symbols apply, indicate all) [3]

According to International Patent Classification (IPC) or to both National Classification and IPC

Int.Cl[4] G21B 1/00, H05H 15/00, G01V 7/00, C30B 23/08, G03H 1/00

**II. FIELDS SEARCHED**

Minimum Documentation Searched [4]

| Classification System | Classification Symbols |
|---|---|
| IPC | G21B 1/00, H05H 5/00-15/00, G01V 7/00-7/16, C30B 23/00-23/08, G03H 1/00-1/34, 3/00, 5/00 |

Documentation Searched other than Minimum Documentation to the Extent that such Documents are Included in the Fields Searched [5]

| | |
|---|---|
| Jitsuyo Shinan Koho | 1926 - 1985 |
| Kokai Jitsuyo Shinan Koho | 1971 - 1985 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | JP, B2, 50-35825 (Canon Inc.), 19 November 1975 (19. 11. 75) & CA, A, 945421 & DE, B, 1547179 & NL, B, 169116 | 1 - 70 |
| A | JP, B2, 57-37836 (K.M.S. Fusion Inc.), 12 August 1982 (12. 08. 82) & IL, A, 44645 & DE, A, 2424714 & AU, A, 6810974 & ZA, A, 742434 & ES, A, 426475 & GB, A, 1459936 & IT, A, 1012670 & FR, B, 2231027 & CA, A, 1020381 | 1 - 29, 42 - 57 |
| A | Denshi Tsushin Gakkai-shi, Vol.68, No.3, March. 1985 (Tokyo), Chiba Jiro, "Juryokuha Tsushin no Kanosei", P.277-280 | 33 - 36, 65 - 69 |
| X | JP, A, 57-178281 (Toyama Yoshie) 2 November 1982 (02. 11. 82) & WO, A, 82/3798 & AU, A, 8391182 & DK, A, 569782 & NO, A, 824350 & FI, A, 824468 & BR, A, 8207662 & EP, A, 77405 | 37 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| September 6, 1985 (06. 09. 85) | September 12, 1985 (12. 09. 85) |
| **International Searching Authority [1]** | **Signature of Authorized Officer [19]** |
| Japanese Patent Office | |

International Application No. PCT/JP85/00338

FURTHER INFORMATION CONTINUED FROM THE SECOND SHEET

V. ☐ OBSERVATIONS WHERE CERTAIN CLAIMS WERE FOUND UNSEARCHABLE[10]

This international search report has not been established in respect of certain claims under Article 17(2) (a) for the following reasons:

1. ☐ Claim numbers.........., because they relate to subject matter[12] not required to be searched by this Authority, namely:

2. ☐ Claim numbers.........., because they relate to parts of the international application that do not comply with the prescribed requirements to such an extent that no meaningful international search can be carried out[13], specifically:

VI. ☒ OBSERVATIONS WHERE UNITY OF INVENTION IS LACKING[11]

This International Searching Authority found multiple inventions in this international application as follows:

See enclosed reference

1. ☒ As all required additional search fees were timely paid by the applicant, this international search report covers all searchable claims of the international application.
2. ☐ As only some of the required additional search fees were timely paid by the applicant, this international search report covers only those claims of the international application for which fees were paid, specifically claims:
3. ☐ No required additional search fees were timely paid by the applicant. Consequently, this international search report is restricted to the invention first mentioned in the claims; it is covered by claim numbers:
4. ☐ As all searchable claims could be searched without effort justifying an additional fee, the International Searching Authority did not invite payment of any additional fee.

Remark on Protest

☐ The additional search fees were accompanied by applicant's protest.

☒ No protest accompanied the payment of additional search fees.